# EUROPÄISCHE PATENTSCHRIFT

(11) **EP 3 197 905 B1**
(45) Veröffentlichungstag und Bekanntmachung des Hinweises auf die Patenterteilung: **30.06.2021**
(21) Anmeldenummer: 15763869.3
(22) Anmeldetag: 10.09.2015
(51) Int. Cl.: C07F 9/48, C07F 9/30, C09K 21/12

(54) **VERFAHREN ZUR HERSTELLUNG VON ETHYLENDIALKYLPHOSPHINSÄUREN, -ESTERN UND -SALZEN SOWIE DEREN VERWENDUNG ALS FLAMMSCHUTZMITTEL**
METHOD FOR PRODUCING ETHYLENEDIALKYLPHOSPHINIC ACIDS, ESTERS AND SALTS, AND THE USE THEREOF AS FLAME RETARDANTS
PROCÉDÉS POUR LA PRÉPARATION D'ACIDES ÉTHYLÈNEDIALKYLPHOSPHINIQUES, ET D'ESTERS ET DE SELS CORRESPONDANTS AINSI QUE LEUR UTILISATION COMME RETARDATEUR DE FLAMME

(30) Priorität: 26.09.2014 DE 102014014253
(43) Veröffentlichungstag der Anmeldung: 02.08.2017
(73) Patentinhaber: Clariant International Ltd, 4132 Muttenz (CH)
(72) Erfinder: SICKEN, Martin, 51149 Köln (DE); SCHNEIDER, Fabian, 69214 Eppelheim (DE)
(74) Vertreter: Jacobi, Carola
(86) Internationale Anmeldenummer: PCT/EP2015/070682
(87) Internationale Veröffentlichungsnummer: WO 2016/045976

(56) Entgegenhaltungen:
- WO-A1-2013/087178
- WO-A2-2010/069545
- DE-A1- 2 302 523

## Beschreibung

Die Erfindung betrifft ein Verfahren zur Herstellung von Ethylenbis(alkyl-phosphinsäuren), -estern und -salzen mittels mindestens einer acetylenischen Verbindung und elektromagnetischer Strahlung. Die Erfindung betrifft auch die Verwendung der nach diesen Verfahren hergestellten Ethylenbis(alkylphosphinsäuren, -ester und -salze.

Ethylenbis(phosphinsäuren) sowie ihre Ester und Salze sind bekannt Verbindungen. Phosphinsäuren des Typs H-P(O)(OX)-[CH₂CH₂-P(O)(OX)]ₙH mit X gleich H, Metall oder eine Alkylgruppe und n größer als 1 werden in DE-A-19912920 und WO-GB-200100374 beschrieben. Diese Phosphinsäuren bzw. ihre Derivate sind oligomer oder polymer. Sie werden durch Verfahren hergestellt, die Telomere erzeugen, die jedoch keinen gezielten Zugang zu Phosphinsäuren mit spezifischer Kettenlänge zulassen.

Organische Phosphinsäuren, deren Salze und Ester sind als Flammschutzmittel bekannt. So beschreibt die EP-B-0699708 flammgeschützte Polyesterformmassen, wobei die Polyesterformmassen durch den Zusatz von Calcium- oder Aluminiumsalzen von Phosphinsäuren oder von Diphosphinsäuren flammfest ausgerüstet werden. Die vorgenannten Salze werden durch Umsetzung der entsprechenden Phosphinsäuren mit Calcium- oder Aluminiumhydroxid erhalten.

Aufgrund ihres hohen Phosphorgehaltes und ihrer Zweizähnigkeit werden die Diphosphinsäuren als sehr effektive reaktive Flammschutzmittel für Polyester, z. B. für Textil-Anwendungen, beschrieben. Dies gilt besonders für die Ethylenbis-(methylphosphinsäure), speziell in Form ihres Glykolesters (DE-A-2236037).

Die Herstellung der vorgenannten Ethylenbis(methylphosphinsäure) ist technisch sehr aufwendig und erfolgt beispielsweise durch eine Arbuzov-Reaktion von Methylphosphonigsäure-diisopropylester hergestellt aus Methylphosphonigsäuredichlorid durch Umsetzung mit Alkoholen mit Ethylenbromid [P. Mastalerz, Rocziniki Chem 38 (1964), Seite 61-64] und anschließender Esterspaltung.

Die DE-A-2302523 beschreibt die Umsetzung von Alkylphosphonigsäureestern mit Acetylen und die anschließende Spaltung des entstandenen Diesters mit Salzsäure unter Bildung von Alkylchloriden. Die hier eingesetzten Alkylphosphonigsäureester werden aus den entsprechenden Phosphonigsäuredihalogeniden hergestellt.

Die vorgenannten Verfahren weisen u. a. den Nachteil auf, dass sie als letzten Schritt die technisch schwierige Spaltung der entsprechenden Ester vorsehen und somit nur sehr aufwendig durchzuführen sind. Es werden zudem halogenhaltige Nebenprodukte gebildet, die, wie zum Teil auch die vorgenannten Ausgangsprodukte selbst, giftig, selbstentzündlich und/oder korrosiv, also höchst unerwünscht sind. Zudem ist der Einsatz von halogenhaltigen Edukten notwendig, die jedoch in vielen Fällen zu vermeiden sind.

Die erfindungsgemäß hergestellten Verbindungen können in flammgeschützte thermoplastische oder duroplastische Polymerformmassen, Formkörper, -Filme, - Fäden und -Fasern eingesetzt werden. Typischerweise enthalten diese dann 0,5 bis 45 Gew.-% Ethylenbis(alkylphosphinsäuren), -salze oder -ester, die nach einem oder mehreren der Ansprüche 1 bis 18 hergestellt wurden, 0,5 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die WO2010/069545A1 beschreibt ein Verfahren zur Herstellung von Ethylenbis(alkylphosphinsäuren), -estern und -salzen, wobei eine Phosphinsäurequelle mit Olefinen in Gegenwart eines Katalysators A zu einer Alkylphosphonigsäure, deren Salz oder Ester umgesetzt wird und anschließend die so entstandene Alkylphosphonigsäure, deren Salz oder Ester (II) mit einer acetylenischen Verbindung in Gegenwart eines Katalysators B zum Ethylenbis(alkylphosphinsäure)derivat umgesetzt wird.

Hierbei wird die Reaktion von Alkylphosphonigsäure mit Acetylen mit einem chemischem Initiator bei mindestens 90 °C geführt. Die weiter unten ausgeführte erfindungsgemäße Reaktionsführung ist nach Verfahren aus D1 nicht möglich, da gemäß D1 der Initiator bereits bei einer Temperatur von 90 °C ausfällt und durch Umlauffiltration abgetrennt werden muss damit das Endprodukt nicht verunreinigt wird. Das erfindungsgemäße Verfahren vermeidet dieses Problem.

Die WO2013/087178A1 beschreibt Mischungen von Disphosphinsäuren und Alkylphosphonsäuren, die durch Umsetzung einer Phosphorsäurequelle mit einem Alkin in Gegenwart eines Initiators umgesetzt werden. Der Einsatz einer elektromagnetischen Strahlung wird hier nicht erwähnt.

Bisher fehlt es an Verfahren zur Herstellung von Ethylenbis(alkylphosphinsäuren), -estern und -salzen, die wirtschaftlich und großtechnisch zugänglich sind und die insbesondere eine hohe Raum-/Zeitausbeute ermöglichen.

Auch fehlt es an Verfahren, die ohne störende Halogenverbindungen als Edukte ausreichend effektiv sind und zudem an solchen, bei denen die Endprodukte leicht erhalten bzw. isoliert werden können oder auch unter gezielten Reaktionsbedingungen (wie etwa einer Umesterung) gezielt und gewünscht hergestellt werden können.

Darüber hinaus fehlt es an Verfahren zur Herstellung von Ethylenbis(alkylphosphinsäuren), -estern und salzen, die ohne einen molekularen, d. h. chemischen Radikalstarter, auskommen. Die bisher eingesetzten Radikalstarter haben den Nachteil, dass sie meist störende Nebenkomponenten und Verunreinigungen in die Reaktion einbringen, die anschließend aufwendig abgetrennt werden müssen.

Solche Nebenkomponenten sind zum Beispiel die Zersetzungsprodukte der Radikalstarter, aber auch die Lösungsmittel in denen die Radikalstarter gelöst sind. Die Handhabung im Produktionsmaßstab, aufgrund der teilweisen hohen thermischen Instabilität der Radikalstarter, kann technisch sehr aufwendig und damit unwirtschaftlich und kostenintensiv sein.

Die vorgennante Aufgabe wird gelöst durch ein Verfahren zur Herstellung von Ethylenbis(alkylphosphinsäuren), -estern und -salzen, dadurch gekennzeichnet, dass man
a) eine Phosphinsäurequelle (I) 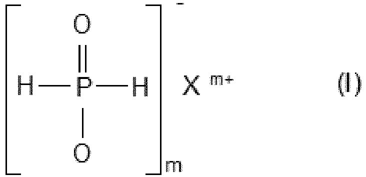 mit Olefinen (IV) 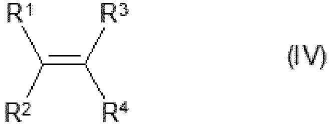 in Gegenwart eines Katalysators A zu einer Alkylphosphonigsäure, deren Salz oder Ester (II) 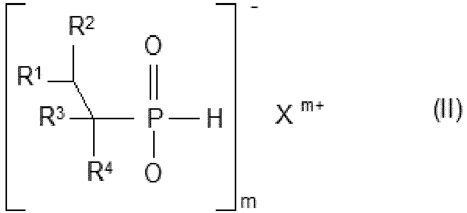 umsetzt,
b) die so entstandene Alkylphosphonigsäure, deren Salz oder Ester (II) mit acetylenischen Verbindung (V) 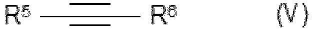 in Gegenwart eines Katalysators B zum Ethylenbis(alkylphosphinsäure)derivat (III) 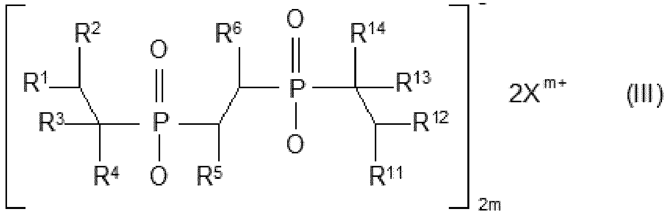 umsetzt, wobei
   - R¹, R², R³, R⁴, R⁵, R⁶, R¹¹, R¹², R¹³, R¹⁴: gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl bedeuten, wobei die Gruppen C₆-C₁₈-Aryl, C₆-C₁₈-Aralkyl, C₆-C₁₈-Alkyl-Aryl mit -C(O)CH₃, OH, CH₂OH, NH₂, NO₂, OCH₃, SH und/oder OC(O)CH₃ substituiert sein können und
   - X: für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht, und/oder für H, C₁-C₁₈-Alkyl, C₆-C₁₈-Aryl, C₆-C₁₈-Aralkyl, C₈-C₁₈-Alkyl-Aryl, (CH₂)ₖOH, CH₂-CHOH-CH₂OH, (CH₂)ₖO(CH₂)ₗH, (CH₂)ₖ-CH(OH)-(CH₂)ₗH, (CH₂-CH₂O)ₖH, (CH₂-C[CH₃]HO)ₖH, (CH₂-C[CH₃]HO)ₖ(CH₂-CH₂O)ₗH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₗ-alkyl, (CH₂-CH₂O)ₖ(CH₂-C[CH₃]HO)O-alkyl, (CH₂)ₖNH₂, (CH₂)ₖN[(CH₂)ₗH]₂ steht, wobei k und l gleich oder verschieden sind und unabhängig voneinander eine ganze Zahl von 0 bis 20, und
   - m: 1 bis 4 bedeutet,
   und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um elektromagnetische Strahlung handelt.

Bevorzugt wird das Verfahren so ausgeführt, dass man die nach Schritt a) erhaltene Alkylphosphonigsäure, deren Salz oder Ester (II) mit einem Alkenoxid oder einem Alkohol M-OH und/oder M'-OH verestert, und den jeweils entstandenen Alkylphosphonigsäureester (II) und/oder Ethylenbis(alkylphosphinsäure)ester (III) dem weiteren Reaktionsschritt b) unterwirft.

Bevorzugt wird auch die nach Schritt b) erhaltene Ethylenbis(alkylphosphinsäure), deren Salz oder Ester (III) davon mit einem Alkenoxid oder einem Alkohol M-OH und/oder M'-OH verestert

Bevorzugt wird die nach Schritt b) erhaltene Ethylenbis(alkylphosphinsäure), deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierten Stickstoffbase zu den entsprechenden Ethylenbis(alkylphosphinsäure)salzen (III) dieser Metalle und/oder einer Stickstoffverbindung umgesetzt.

Bevorzugt sind R¹, R², R³, R⁴, R⁵, R⁶, R¹¹, R¹², R¹³, R¹⁴ gleich oder verschieden und bedeuten, unabhängig voneinander, H, Methyl, Ethyl, n-Propyl, Isopropyl, n-Butyl, Isobutyl, tert. Butyl und/oder Phenyl.

Bevorzugt bedeutet X H, Ca, Mg, Al, Zn, Ti, Mg, Ce, Fe, Methyl, Ethyl-, n-Propyl, Isopropyl, n-Butyl, Isobutyl, tert. Butyl, Phenyl, Oxyethylen, Poly(oxyethylen), Oxypropylen, Poly(oxypropylen), Oxybutylen, Poly(oxybutylen) und/oder AllylEther.

Bevorzugt handelt es sich bei den Übergangsmetallen um Rhodium, Nickel, Palladium, Platin und/oder Ruthenium.

Bevorzugt werden als Olefine gasförmige Olefine eingesetzt.

Bevorzugt handelt es sich bei den gasförmigen Olefinen um Ethylen, Propylen, 1-Buten, 2-Buten und/oder 2-Methylpropylen.

Bevorzugt beträgt die Temperatur im Reaktionsschritt a) 40 - 120 °C und im Reaktionsschritt b) 30 - 100 °C.

Besonders bevorzugt beträgt die Temperatur im Reaktionsschritt a) 60 - 100 °C und im Reaktionsschritt b) 50 - 80 °C.

Bevorzugt beträgt der Druck im Reaktionsschritt a) und im Reaktionsschritt b) jeweils 0 - 10 bar.

Bevorzugt beträgt der Druck im Reaktionsschritt a) und im Reaktionsschritt b) jeweils 1 - 5 bar und der Gasdurchfluss im Reaktionsschritt a) und im Reaktionsschritt b) jeweils 5 - 12 L/h beträgt.

Bevorzugt handelt es sich bei der elektromagnetischen Strahlung um UV-Strahlung.

Besonders bevorzugt handelt es sich bei der elektromagnetische Strahlung um UV-Strahlung mit einer Wellenlänge zwischen 400 und 10 nm.

Bevorzugt handelt es sich bei der acetylenischen Verbindung (V) um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexin-1-ol, 1-Octin-3-ol, 1-Pentin und/oder Phenylacetylen.

Besonders bevorzugt handelt es sich bei der acetylenischen Verbindung (V) um Acetylen.

Bevorzugt handelt es sich bei dem Alkohol M-OH um lineare oder verzweigte, gesättigte und ungesättigte, einwertige Alkohole und bei dem Alkohol M'-OH um mehrwertige organische Alkohole mit einer Kohlenstoffkettenlänge von jeweils C₁-C₁₈.

Die Erfindung betrifft auch die Verwendung von Ethylenbis(alkylphosphinsäuren), - estern und -salzen hergestellt nach einem oder mehreren der Ansprüche 1 bis 18 als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen; als Flammschutzmittel, als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung; als Flammschutzmittel beim Herstellen oder Aushärten von Epoxidharzen, Polyurethanen und ungesättigten Polyesterharzen für Elektronikanwendungen.

Bevorzugt können die vorgenannten Epoxidharze, Polyurethane und ungesättigten Polyesterharze weiterhin Härter, UV-Stabilisatoren, Flexibilisatoren und/oder andere Zusätze enthalten.

Bevorzugt sind die Gruppen C₆-C₁₈-Aryl, C₆-C₁₈-Aralkyl und C₆-C₁₈-Alkyl-Aryl mit SO₃X₂, -C(O)CH₃, OH, CH₂OH, CH₃SO₃X₂, PO₃X₂, NH₂, NO₂, OCH₃, SH und/oder OC(O)CH₃ substituiert.

Bevorzugt ist k = 1 bis 10 und l = 1 - 10.

Bevorzugt wird das Katalysatorsystem A durch Umsetzung von einem Übergangsmetall und/oder einer Übergangsmetallverbindung und mindestens einem Liganden gebildet.

Bevorzugt handelt es sich bei der UV-Strahlung um elektromagnetische Strahlung im Wellenlängenbereich von 10 nm bis 400 nm. Diese kann beispielsweise durch eine Quecksilberdampflampe erzeugt werden.

Alle vorgenannten Umsetzungen können auch stufenweise ausgeführt werden; ebenso können in den verschiedenen Verfahrensschritten auch die jeweiligen resultierenden Reaktionslösungen eingesetzt werden.

Bevorzugt ist R¹¹ = R¹, R¹² = R², R¹³ = R³ und R¹⁴ = R⁴.

Handelt es sich bei der Ethylenbis(alkylphosphinsäure) (III) nach Schritt c) um einen Ester, so kann bevorzugt eine saure oder basische Hydrolyse durchgeführt werden, um die freie Ethylenbis(alkylphosphinsäure) oder deren Salz zu erhalten.

Bevorzugt handelt es sich bei der Ethylenbis(alkylphosphinsäure) um Ethylenbis(octylphosphinsäure), Ethylenbis(ethylphosphinsäure), Ethylenbis(propylphosphinsäure), Ethylenbis(i-propylphosphinsäure), Ethylenbis(butylphosphinsäure), Ethylenbis(sec-propylphosphinsäure), Ethylenbis(i-butylphosphinsäure), Ethylenbis(hexylphosphinsäure), Ethylenbis(2-phenylethylphosphinsäure).

Bevorzugt handelt es sich bei dem Ethylenbis(alkylphosphinsäure)ester um einen Propionsäure-, Methyl-, Ethyl-; i-Propyl-; Butyl-, Phenyl-; Octyl-; 2-Hydroxyethyl-, 2-Hydroxypropyl-, 3-Hydroxypropyl-, 4-Hydroxybutyl- und/oder 2,3-Dihydroxy-Propylester der oben genannten Ethylenbis(alkylphosphinsäuren).

Bevorzugt handelt es sich bei dem Ethylenbis(alkylphosphinsäure)-Salz um ein Aluminium(III)-, Calcium(II)-, Magnesium(II)-, Cer(III)-, Ti(IV)- und/oder Zink(II)salz der oben genannten Ethylenbis(alkylphosphinsäuren).

Erfindungsgemäße Verbindungen sind insbesondere solche der Formel
Y-P(O)(OX)-[CH₂CH₂-P(O)(OX)]ₙY in der jeweils
Y Ethyl und X H;
Y Ethyl und X Na;
Y Ethyl und X Butyl;
Y Ethyl und X Aluminium;
Y Butyl und X H;
Y Butyl und X Na;
Y Butyl und X Butyl;
Y Butyl und X Aluminium
bedeuten.

Bevorzugt handelt es sich bei den Übergangsmetallen für den Katalysator A um Rhodium, Nickel, Palladium, Platin und/oder Ruthenium. Diese Metalle werden ebenfalls für die Übergangsmetallverbindungen eingesetzt.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, lodid, Fluorat, Chlorat, Bromat, Iodat, Fluorit, Chlorit, Bromit, Iodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzol-sulfonat, Naphthylsulfonat, Toluolsulfonat, t-Butylsulfonat, 2-Hydroxypropansulfonat und sulfonierte lonentauscherharze; und/oder organische Salze, wie etwa Acetyl-acetonate und Salze einer Carbonsäure mit bis zu 20 Kohlenstoffatomen, wie etwa Formiat, Acetat, Propionat, Butyrat, Oxalat, Stearat und Zitrat einschließlich halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylboratanionen- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere der oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier Bor, Zirconium, Tantal, Wolfram, Rhenium, Kobalt, Iridium, Nickel, Palladium, Platin und/oder Gold bevorzugt ist.

Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite®, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond®, QuadraSil™, auf funktionalisierten Polysiloxanen wie etwa Deloxan®, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf Ionentauschern wie etwa Amberlite™, Amberjet™, Ambersep™, Dowex®, Lewatit®, ScavNet®, auf funktionalisierten Polymeren wie etwa Chelex®, QuadraPure™, Smopex®, PolyOrgs®, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder der Übergangsmetalle stellen bevorzugt ebenfalls deren Komplexverbindungen dar. Komplexverbindungen der Metallsalze und/oder der Übergangsmetalle setzen sich aus den Metallsalzen bzw. Übergangsmetallen und einem oder mehreren Komplexbildnern zusammen.

Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopenta-dienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise Palladium, Platin, Nickel, Rhodium selbst; Palladium, Platin, Nickel oder Rhodium auf Alumina, auf Silika, auf Bariumcarbonat, auf Bariumsulfat, auf Calciumcarbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney®-Nickel, Nickel-Zink-Eisen-Oxid; Palladium(II)-, Nickel(II)- ,Platin(II)-, Rhodium, -chlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetylacetonat, -tetrafluoroborat, -thiosulfat, -trifluoroacetat, -phthalocyanintetrasulfonsäure Tetranatriumsalz, -methyl, -cyclopentadienyl, -methylcyclopentadienyl, -ethylcyclopentadienyl, -pentamethyl-cyclopentadienyl, -2,3,7,8,12,13,17,18-octaethyl-21H,23H-porphin, -5,10,15,20-tetraphenyl-21H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21H,23H-porphin und deren 1,4-Bis(diphenylphosphin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenylsulfinyl)ethan-, 1,3-Bis(2,6-diisopropylphenyl)imidazoliden)(3-chloro-pyridyl)-, 2'-(Dimethylamino)-2-biphenylyl-, Dinorbornylphosphin-, 2-(Dimethylamino-methyl)ferrocen-, Allyl-, Bis(Diphenylphosphino)butan-, (N-succinimidyl)bis-(triphenyl-phosphin)-, Dimethylphenylphosphin-, Methyldiphenylphosphin-, 1,10-Phenanthrolin-, 1,5-Cyclooctadien-, N,N,N',N'-Tetramethylethylendiamin-, Triphenyl-phosphin-, Tri-o-tolylphosphin-, Tricyclohexylphosphin-, Tributylphosphin-, Triethylphosphin-, 2,2'-Bis(diphenylphosphino)-1,1'-binaphthyl-, 1,3-Bis(2,6-diisopropylphenyl)imidazol-2-yliden-, 1,3-Bis(mesityl)imidazol-2-yliden-, 1,1'-Bis(di-phenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylaminophenyl)phosphin)-, Bis(tert.-butyliso-cyanid)-, 2-Methoxyethylether-, Ethylenglycoldimethylether-, 1,2-Dimethoxyethan-, Bis(1,3-diamino-2-propanol)-, Bis(N,N-diethylethylendiamin)-, 1,2-Diaminocyclohexan-, Pyridin-, 2,2':6',2"-terpyridin-, Diethylsulfid-, Ethylen-,Amin-Komplexe; Kalium-, Natrium-, Ammoniumhexachloropalladat(IV), Kalium-, Natrium-, Ammoniumtetrachloropalladat(II), Bromo(tri-tert-butylphosphin)palladium(I) Dimer, (2-Methylallyl)palladium(II)chlorid Dimer, Bis(dibenzylidenaceton)palladium(0), Tris(dibenzylidenaceton)dipalladium(0), Tetrakis(triphenylphosphin)palladium(0), Tetrakis-(tricyclohexylphosphin)palladium (0), Bis[1,2-bis(diphenylphosphin)ethan]-palladium(0), Bis(3,5,3',5'-dimethoxydibenzylidenaceton)palladium(0), Bis(tri-tert-butylphos-phin)palladium(0), meso-Tetraphenyltetrabenzoporphin Palladium, Tetrakis(methyl-diphenylphosphin)palladium(0), Tris(3,3',3"-phophinidyn-tris(benzolsulfonato)palla-dium(0) Nonanatriumsalz, 1,3-Bis(2,4,6-trimethylphenyl)-imidazol-2-yliden(1,4-naphtho-quinon)palladium(0), 1,3-Bis(2,6-diisopropylphenyl)-imidazol-2-yliden(1,4-naphtho-quinon)palladium(0), und deren Chloroform-Komplex; Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetracyano-nickelat(II), Kaliumnickel(IV)paraperiodat, Dilithiumtetrabromonickelat(II), Kaliumtetra-cyanonickelat(II); Platin(IV)chlorid, -oxid, -sulfid, Kalium-, Natrium-, Ammoniumhexachloroplatinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraamin-platin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenyl-phosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (VI)

PR⁸₃ (VI)

in der die Reste R⁸ unabhängig voneinander für Wasserstoff, geradkettiges, verzweigtes oder cyclisches C₁-C₂₀-Alkyl, C₆-C₂₀-Alkylaryl, C₂-C₂₀-Alkenyl, C₂-C₂₀-Alkinyl, C₁-C₂₀-Carboxylat, C₁-C₂₀-Alkoxy, C₂-C₂₀-Alkenyloxy, C₂-C₂₀-Alkinyloxy, C₂-C₂₀-Alkoxy-carbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R⁹ substituiertes Phenyl- oder durch wenigstens ein R⁹ substituiertes Naphtyl stehen. R⁹ steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R¹⁰)M, -CO₂M, -PO₃M₂, -AsO₃M₂, -SiO₂M, -C(CF₃)₂OM (M = H, Li, Na oder K), wobei R¹⁰ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxyat, C₁-C₂₀-Alkoxy, C₂-C₂₀-Alkenyloxy, C₂-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₆-C₂₀-Arylalkyl, C₆-C₂₀-Alkylaryl, Phenyl und/oder Biphenyl bedeutet. Vorzugsweise sind alle Gruppen R⁸ identisch.

Geeignete Phosphine (VI) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfonato-phenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphosphinoethyl)trimethylammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel (VII)

R⁸M"-Z-M" R⁸ (VII).

In dieser Formel repräsentieren M" unabhängig voneinander N, P, As oder Sb.

Bevorzugt sind die beiden M" gleich und besonders bevorzugt steht M" für ein Phosphoratom.

Jede Gruppe R⁸ repräsentiert unabhängig voneinander die unter Formel (VI) beschrieben Reste. Vorzugsweise sind alle Gruppen R⁸ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, die unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'-oder 1,2-Ferrocenyl-Reste, 2,2'-(1,1'-Biphenyl)-, 4,5-Xanthen- und/oder Oxydi-2,1-phenylen-Reste.

Geeignete bidentate Phosphinliganden (VII) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(di-cyclohexyl-), 1,3-Bis(diisopropyl-), 1,3-Bis(di-tert.-butyl-) und 1,3-Bis(diphenylphos-phino)propan; 1,4-Bis-(diisopropyl-) und 1,4-Bis(diphenylphosphino)butan; 1,5-Bis(dicyclohexylphosphino)pentan; 1,2-Bis(di-tert.-butyl-), 1,2-Bis(di-phenyl-), 1,2-Bis(dicyclohexyl-), 1,2-Bis(dicyclo-pentyl-), 1,3-Bis(di-tert.-butyl-), 1,3-Bis(diphenyl-), 1,3-Bis(di-cyclohexyl-) und 1,3-Bis(dicyclopentylphosphino)benzol; 9,9-Dimethyl-4,5-bis(diphenylphosphino)xanthen, 9,9-Dimethyl-4,5-bis(diphenylphosphino)-2,7-di-tert.-butylxanthen, 9,9-Dimethyl-4,5-bis(di-tert.-butylphosphino)xanthen, 1,1'-Bis(diphenyl-phosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(diphenylphosphin), 2,5-(Di-isopropylphospholano)benzol, 2,3-O-Isopropropyliden-2,3-dihydroxy-1,4-bis(diphenyl-phosphino)butan, 2,2'-Bis(di-tert.-butylphosphino)-1,1'-biphenyl, 2,2'-Bis(dicyclo-hexylphosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethyl-amin, 2-[2-(Diphenylphosphino)ethyl]pyridin; Kalium-, Natrium- und Ammoniumsalze von 1,2-Bis(di-4-sulfonatophenylphosphino)-benzol, (2,2'-Bis [[bis(3-sulfonatophenyl)phosphino]methyl]-4,4',7,7'-tetrasulfonato-1,1'-binapthyl, (2,2'-Bis[[bis(3-sulfonatophenyl)phosphino]methyl]-5,5'-tetrasulfonato-1,1'-biphenyl, (2,2'-Bis [[bis(3-sulfonatophenyl)phosphino]methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphos-phino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonato-phenyl)porphin, Meso-tetrakis(3-sulfonatomesityl)porphin, Tetrakis(4-carboxy-phenyl)porphin und 5,11,17,23-Sulfonato-25,26,27,28-tetrahydroxycalix[4]aren.

Zudem können die Liganden der Formel (VI) und (VII) durch die Reste R⁸ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4.

Bevorzugt erfolgen die Umsetzungen in den Verfahrensstufen a), b) und c) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder des Übergangsmetalls und/oder der Übergangsmetallverbindung und/oder Katalysatorsystems und/oder des Liganden und/oder der Edukte nach den Verfahrensstufen a), b) und c) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z.B. Destillation, Filtration und/oder Extraktion abgetrennt.

Bevorzugt erfolgt die Umsetzungen in den Verfahrensstufen a), b) und c) wahlweise in Absorptionskolonnen, Sprühtürmen, Blasensäulen, Rührkesseln, Rieselbettreaktoren, Strömungsrohren, Schlaufenreaktoren und/oder Knetern.

Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der Katalysator A während der Umsetzung homogen und/oder heterogen.

Bevorzugt wird der Katalysator A vor der Umsetzung und/oder zu Beginn der Umsetzung und/oder während der Umsetzung in situ generiert.

Bevorzugt wirkt der jeweils heterogen wirkende Katalysator während der Umsetzung als Suspension oder an eine feste Phase gebunden.

Die erfindungsgemäßen Reaktionen können in flüssiger Phase, in der Gasphase oder in überkritischer Phase durchgeführt werden. Dabei wird der Katalysator A bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole wie z.B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z.B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan und Methylcyclohexan etc.; Ether wie Anisol (Methylphenylether), t-Butylmethylether, Dibenzylether, Diethylether, Dioxan, Diphenylether, Methylvinyl-ether, Tetrahydrofuran, Triisopropyl-ether etc.; Glycolether wie Diethylenglycoldiethylether, Diethylenglycoldimethylether (Diglyme), Diethylenglycolmonobutylether, Diethylenglycolmonomethylether, 1,2-Dimethoxy-ethan (DME Monoglyme), Ethylen-glycolmonobutylether, Triethylen-glycoldimethylether (Triglyme), Triethylenglycol-monomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und/oder 1-Vinyl-2-pyrrolidon eingesetzt.

Bevorzugt erfolgt die Umsetzung bei einem Druck des Olefins von 0,01 - 100 bar, besonders bevorzugt bei einem Druck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel (II) ist dadurch gekennzeichnet, dass man eine Phosphinsäurequelle mit Olefinen in Gegenwart eines Katalysators umsetzt und das Produkt (II) (Alkylphosphonigsäure bzw. -salze, -ester) von Katalysator, Übergangsmetall, Übergangsmetallverbindung, Ligand, Komplexbildner, Salzen und Nebenprodukten befreit wird.

Erfindungsgemäß werden der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite®, Kieselgur; Metallcarbonate wie etwa Bariumcarbonat, Calciumcarbonat, Strontiumcarbonat; Metallsulfate wie etwa Bariumsulfat, Calciumsulfat, Strontiumsulfat; Metallphosphate wie etwa Aluminiumphosphat, Vanadiumphosphat Metallcarbide wie etwa Siliconcarbid; Metallaluminate wie etwa Calciumaluminat; Metallsilikate wie etwa Aluminiumsilikat, Kreiden, Zeolithe, Bentonit, Montmorillonit, Hectorit; funktionalisierte Silikate, funktionalisierte Silikagele wie etwa SiliaBond®, QuadraSil™; funktionalisierte Polysiloxane wie etwa Deloxan®; Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, lonentauscher wie etwa Amberlite™, Amberjet™, Ambersep™, Dowex®, Lewatit®, ScavNet®; funktionalisierte Polymere wie etwa Chelex®, QuadraPure™, Smopex®, PolyOrgs®; polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt. Bevorzugt beträgt die Verweilzeit von Hilfsmittel 1 0,5 - 360 Minuten.

Hilfsmittel 2 ist bevorzugt das vorgenannte, erfindungsgemäße Lösungsmittel, wie sie bevorzugt in der Verfahrensstufe a) eingesetzt werden.

Die Veresterung der Ethylenbis(alkylphosphinsäure) (III) bzw. der Alkylphosphonigsäurederivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt wird hierbei nach Schritt a) die Alkylphosphonigsäure (II) mit einem Alkohol der allgemeinen Formel M-OH und/oder M'-OH oder durch Umsetzung mit Alkylenoxiden, wie nachfolgend angeführt, direkt verestert.

Bevorzugte Alkohole M-OH sind primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugte Alkohole M'-OH sind Ethylenglykol, 1,2-Propylenglykol, 1,3-Propylenglykol, 1,4-Butandiol, 2,2-Dimethylpropan-1,3-diol, Neopentylglykol, 1,6-Hexandiol, 1,4-Cyclohexandimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als Alkohole M-OH und M'-OH auch ein- oder mehrwertige, ungesättigte Alkohole mit einer Kohlenstoffkettenlänge von C₁-C₁₈, etwa n-Buten-2-ol-1, 1,4-Butendiol und Allylalkohol.

Geeignet sind als Alkohole M-OH und M'-OH auch Umsetzungsprodukte von einwertigen Alkoholen mit einem oder mehreren Molekülen von Alkylenoxiden, bevorzugt mit Ethylenoxid und/oder 1,2-Propylenoxid. Bevorzugt sind 2-Methoxyethanol, 2-Ethoxyethanol, 2-n-Butoxyethanol, 2-(2'-Ethylhexyloxy)-ethanol, 2-n-Dodecoxy-ethanol, Methyldiglykol, Ethyldiglykol, Isopropyldiglykol, Fettalkoholpolyglykolether und Arylpolyglykolether.

Bevorzugt sind als Alkohole M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als Alkohole M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100 - 1.000 g/mol, besonders bevorzugt von 150 - 350 g/mol.

Bevorzugt sind als Alkohole M-OH und M'-OH auch Umsetzungsprodukte von Ethylenoxid mit Poly-1,2-propylenglykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100 - 1.000 g/mol, besonders bevorzugt von 150 - 450 g/mol.

Einsetzbar sind als Alkohole M-OH und M'-OH auch Umsetzungsprodukte von Alkylenoxiden mit Ammoniak, primären oder sekundären Aminen, Schwefelwasserstoff, Merkaptanen, Sauerstoffsäuren des Phosphors und C₂-C₆-Dicarbonsäuren. Geeignete Umsetzungsprodukte von Ethylenoxid mit Stickstoffverbindungen sind Triethanolamin, Methyldiethanolamin, n-Butyldiethanolamin, n-Dodecyldiethanolamin, Dimethylethanolamin, n-Butylmethylethanolamin, Di-n-butylethanolamin, n-Dodecylmethylethanolamin, Tetrahydroxyethylethylendiamin oder Pentahydroxyethyldiethylentriamin.

Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die in Verfahrensschritt a) genannten Lösungsmittel und auch die eingesetzten Alkohole und Alkylenoxide. Diese bieten Vorteile in Form einer höheren Raum-Zeit-Ausbeute.

Bevorzugt wird die Umsetzung unter dem eigenen Dampfdruck des eingesetzten Alkohols und/oder Alkylenoxids und/oder des Lösungsmittels durchgeführt.

Bevorzugt erfolgt die Umsetzung bei einem Druck des eingesetzten Alkohols und/oder Alkylenoxids von 0,01 - 100 bar, besonders bevorzugt bei einem Druck des Alkohols von 0,1 - 10 bar.

Bevorzugt wird die Umsetzung bei einer Temperatur von -20 bis 340 °C durchgeführt, besonders bevorzugt bei einer Temperatur von 20 bis 180 °C.

Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw. Alkylphosphonigsäure (II) bzw. Ethylenbis(alkylphosphinsäure) (III) von 10.000:1 bis 0,001:1, besonders bevorzugt im Verhältnis von 1.000:1 bis 0,01:1.

Bevorzugt erfolgt die Umsetzung in einem Molverhältnis der Phosphinsäurequelle (I) bzw. Alkylphosphonigsäure (II) bzw. Ethylenbis(alkylphosphinsäure) (III) zum Lösungsmittel von 1:10.000 bis 1:0, besonders bevorzugt in einem Phosphinsäure-Lösungsmittel-Molverhältnis von 1:50 bis 1:1.

Geeignete Lösungsmittel sind die für Schritt a) genannten Lösungsmittel.

Bevorzugt erfolgt die Umsetzung der Alkylphosphonigsäuren (II) mit der acetylenischen Verbindung (V) bei einer Temperatur von 0 bis 250 °C, besonders bevorzugt bei einer Temperatur von 20 bis 150 °C und insbesondere bei einer Temperatur von 40 bis 100 °C.

Bevorzugt besteht die Atmosphäre bei der Umsetzung mit der acetylenischen Verbindung (V) zu 50 bis 99,9 Gew.-% aus Bestandteilen des Lösungsmittels und der acetylenischen Verbindung (V), bevorzugt 70 bis 95 %.

Bevorzugt erfolgt die Umsetzung während des Zusatz der acetylenischen Verbindung (V) bei einem Druck von 1 bis 20 bar.

Der Gegenstand der vorliegenden Erfindung umfasst insbesondere auch ein Verfahren, bei dem man eine Alkylphosphonigsäure (II) mit einer acetylenischen Verbindung (V) in Gegenwart von UV-Strahlung umsetzt und diese kontinuierlich aus dem Reaktionsgemisch durch Umlauf-Filtration entfernt und ebenso kontinuierlich die verbrauchte Alkylphosphonigsäure (II) durch neue ersetzt.

In einer weiteren Ausführungsform des Verfahrens wird das nach Verfahrensstufe a) und/oder b) erhaltene Produktgemisch aufgearbeitet.

In einer weiteren Ausführungsform des Verfahrens wird das nach Verfahrensstufe a) erhaltene Produktgemisch aufgearbeitet und danach die nach Verfahrensstufe b) erhaltenen Ethylenbis(alkylphosphinsäuren) und/oder deren Ester und Alkalisalze in Verfahrensstufe c) umgesetzt.

Die Ethylenbis(alkylphosphinsäure) oder deren Salz (III) kann im Folgenden zu weiteren Metallsalzen umgesetzt werden.

Bevorzugt handelt es sich bei den eingesetzten Metallverbindungen der Verfahrensstufe c) um Verbindungen der Metalle Mg, Ca, Al, Sb, Sn, Ge, Ti, Fe, Zr, Zn, Ce, Bi, Sr, Mn, Li, Na, K, besonders bevorzugt um solche von Mg, Ca, Al, Ti, Zn, Sn, Ce, Fe.

Geeignete Lösungsmittel für Verfahrensstufe c) sind die, wie sie weiter vorne in Verfahrensstufe a) eingesetzt werden.

Bevorzugt erfolgt die Umsetzung der in Verfahrensstufe c) in wässrigem Medium.

Bevorzugt setzt man in Verfahrensstufe c) die nach Verfahrensstufe b) erhaltenen Ethylenbis(alkylphosphinsäuren), deren Ester und/oder Alkalisalze (III) mit Metallverbindungen von Mg, Ca, Al, Zn, Ti, Sn, Zr, Ce oder Fe zu den Ethylenbis(alkylphosphinsäure)salzen (III) dieser Metalle um.

Die Umsetzung erfolgt dabei in einem Molverhältnis von Ethylenbis(alkylphosphinsäure)/ -ester/-salz (III) zu Metall von 8 zu 1 bis 1 zu 8 (für vierwertige Metallionen oder Metalle mit stabiler vierwertiger Oxidationsstufe), von 6 zu 1 bis 1 zu 6 (für dreiwertige Metallionen oder Metalle mit stabiler dreiwertiger Oxidationsstufe), von 4 zu 1 bis 1 zu 4 (für zweiwertige Metallionen oder Metalle mit stabiler zweiwertiger Oxidationsstufe) und von 3 zu 1 bis 1 zu 6 (für einwertige Metallionen oder Metalle mit stabiler einwertiger Oxidationsstufe).

Bevorzugt führt man in Verfahrenstufe b) erhaltenes Ethylenbis(alkylphosphinsäure)ester/-salz (III) in die entsprechende Ethylenbis(alkylphosphinsäure) über und setzt in Verfahrensstufe c) diese mit Metallverbindungen von Mg, Ca, Al, Zn, Ti, Sn, Zr, Ce oder Fe zu den Ethylenbis(alkylphosphinsäure)salzen (III) dieser Metalle um.

Bevorzugt wandelt man in Verfahrenstufe b) erhaltene Ethylenbis(alkylphosphinsäure)/-ester (III) in ein Ethylenbis(alkylphosphinsäure)-Alkalisalz um und setzt in Verfahrensstufe c) dieses mit Metallverbindungen von Mg, Ca, Al, Zn, Ti, Sn, Zr, Ce oder Fe zu den Ethylenbis(alkylphosphinsäure)salzen (III) dieser Metalle um.

Bevorzugt handelt es sich bei den Metallverbindungen von Mg, Ca, Al, Zn, Ti, Sn, Zr, Ce oder Fe für Verfahrenstufe c) um Metalle, Metalloxide, -hydroxide, -oxidhydroxide-borate, -carbonate, -hydroxocarbonate, -hydroxocarbonathydrate, gemischte -hydroxocarbonate, gemischte -hydroxocarbonathydrate, -phosphate, -sulfate, -sulfat-hydrate, -hydroxosulfathydrate, gemischte -hydroxosulfathydrate, -oxysulfate, -acetate, -nitrate,-fluoride, -fluoridhydrate, -chloride, chloridhydrate, -oxychloride, -bromide, -iodide, -iodidhydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, Aluminiumfluorid, -hydroxychlorid, -bromid, -iodid, -sulfid, -selenid; -phosphid, -hypophosphit, -antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxyverbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -stearat, -trifluoromethansulfonat, -benzoat, -salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auch Zinkborat, -carbonat, -hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide.

Bevorzugt sind Zinksalze der Oxosäuren der Übergangsmetalle (bspw. Zinkchromat(VI)hydroxyd, -chromit, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Bei den Titan-Verbindungen ist metallisches Titan ebenso wie Titan(III) und/oder (IV) -chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid bevorzugt.

Geeignet ist auch metallisches Zinn sowie Zinnsalze (Zinn(II) und /oder (IV) -chlorid); Zinnoxide und Zinn-Alkoxid wie z. B. Zinn-(IV)-tert-butoxid.

Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Die Umsetzung in Verfahrensstufe c) erfolgt bei einem Feststoffgehalt der Ethylenbis(alkylphosphinsäure)salze von 0,1 bis 70 Gew.-%, bevorzugt 5 bis 40 Gew.-%.

Die Umsetzung in Verfahrensstufe c) erfolgt bei einer Temperatur von 20 bis 250 °C, bevorzugt bei 80 bis 120 °C.

Die Umsetzung in Verfahrensstufe c) bei einem Druck zwischen 0,01 und 1.000 bar, bevorzugt bei 0,1 bis 100 bar.

Bevorzugt erfolgt die Umsetzung in Verfahrensstufe c) während einer Reaktionszeit von 1^{∗}10⁻⁷ bis 1.000 h.

Bevorzugt wird das nach der Verfahrensstufe c) durch Filtrieren und/oder Zentrifugieren aus dem Reaktionsgemisch abgetrenntes Ethylenbis(alkylphosphinsäure)salz (III) getrocknet.

Bevorzugt wird das nach Verfahrensstufe b) erhaltene Produktgemisch ohne weitere Reinigung mit den Metallverbindungen umgesetzt.

Bevorzugte Lösungsmittel sind die in Verfahrensschritt a) genannten Lösungsmittel.

Bevorzugt ist die Umsetzung in Verfahrensstufe b) und/oder c) im durch Stufe a) gegebenen Lösungsmittelsystem.

Bevorzugt ist die Umsetzung in Verfahrensstufe c) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe a), b) und/oder c) erhaltene Produktgemisch aufgearbeitet.

In einer weiteren Ausführungsform des Verfahrens wird das nach Verfahrensstufe b) erhaltene Produktgemisch aufgearbeitet und danach die nach Verfahrensstufe b) erhaltenen Ethylenbis(alkylphosphinsäuren) und/oder deren Salze oder Ester (III) in Verfahrensstufe c) mit den Metallverbindungen umgesetzt.

Bevorzugt wird das Produktgemisch nach Verfahrensstufe b) aufgearbeitet, indem die Ethylenbis(alkylphosphinsäuren) und/oder deren Salze oder Ester (III) durch Entfernen des Lösungsmittelsystems isoliert werden, z. B. durch Eindampfen.

Bevorzugt weist das Ethylenbis(alkylphosphinsäure)salz (III) der Metalle Mg, Ca, Al, Zn, Ti, Sn, Zr, Ce oder Fe wahlweise eine Restfeuchte von 0,01 bis 10 Gew.-%, bevorzugt von 0,1 bis 1 Gew.-%, eine mittlere Teilchengröße von 0,1 bis 2.000 µm, bevorzugt von 10 bis 500 µm, eine Schüttdichte von 80 bis 800 g/l, bevorzugt von 200 bis 700 g/l, eine Rieselfähigkeit nach Pfrengle von 0,5 bis 10, bevorzugt von 1 bis 5, auf.

Besonders bevorzugt enthalten die Formkörper, -Filme, -Fäden und -Fasern 5 bis 30 Gew.-% der Ethylenbis(alkylphosphinsäure)/-ester/-salze, hergestellt nach einem oder mehreren der Ansprüche 1 bis 18, 40 bis 85 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugt ist ein Flammschutzmittel, enthaltend 50 bis 99 Gew.-% der Ethylenbis(alkylphosphinsäure), -ester und -salze (III) und 0,1 bis 50 Gew.-% weitere Additive, besonders bevorzugt Diole.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachlorocyclopentadien-Addukte, Roter Phosphor, Melaminderivate, Melamincyanurate, Ammoniumpolyphosphate und Magnesiumhydroxid. Bevorzugte Additive sind auch weitere Flammschutzmittel, insbesondere Salze von Dialkylphosphinsäuren.

Insbesondere betrifft die Erfindung die Verwendung der erfindungsgemäßen Ethylenbis(alkylphosphinsäure), -ester und -salze (III) als Flammschutzmittel bzw. als Zwischenstufe zur Herstellung von Flammschutzmitteln für thermoplastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und deren Ester und Diolen und/oder von Hydroxycarbonsäuren oder den entsprechenden Lactonen ab. Besonders bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex® 2500, Celanex® 2002, Fa Celanese; Ultradur®, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Synthetische lineare Polyester mit permanentem Flammschutz setzen sich aus Dicarbonsäure-Komponenten, Diol-Komponenten der erfindungsgemäßen Ethylenbis(alkylphosphinsäuren) und -ester oder aus der nach dem erfindungsgemäßen Verfahren hergestellten Ethylenbis(alkylphosphinsäuren) und -ester als Phosphor-enthaltende Kettenglieder zusammen. Die Phosphor enthaltenden Kettenglieder machen 2 - 20 Gew.-% der Dicarbonsäure-Komponente des Polyesters aus. Bevorzugt beträgt der resultierende Phosphorgehalt im Polyester 0,1 - 5 Gew.-%, besonders bevorzugt 0,5 - 3 Gew.-%.

Die folgenden Schritte können mit oder unter Zugabe der erfindungsgemäß hergestellten Verbindungen ausgeführt werden.

Bevorzugt wird zur Herstellung der Formmasse ausgehend von den freien Dicarbonsäure und Diolen zunächst direkt verestert und dann polykondensiert.

Bevorzugt wird ausgehend von Dicarbonsäureestern, insbesondere Dimethylestern, zunächst umgeestert und dann unter Verwendung der hierfür üblichen Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt findet die Veresterung und/oder Umesterung bei der Polyesterherstellung bei Temperaturen von 100 - 300 °C statt, besonders bevorzugt bei 150 - 250 °C.

Bevorzugt findet die Polykondensation bei der Polyesterherstellung bei Drücken zwischen 0,1 bis 1,5 mbar und Temperaturen von 150 - 450 °C statt, besonders bevorzugt bei 200 - 300 °C.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18, bevorzugt 0,5 - 15 und bei Folien 0,2 - 15, bevorzugt 0,9 - 12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und
-methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon®, Fa. DuPont, Ultramid®, Fa. BASF, Akulon® K122, Fa. DSM, ®Zytel 7301, Fa. DuPont; Durethan® B 29, Fa. Bayer und Grillamid®, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die Ethylenbis(alkylphosphinsäure)/-ester/-salze, hergestellt nach einem oder mehreren der Ansprüche 1 bis 18 werden bevorzugt in Formmassen angewendet, die weiter zur Erzeugung von Polymer-Formkörpern eingesetzt werden.

Besonders bevorzugt enthält die flammgeschützte Formmasse 5 bis 30 Gew.-% Ethylenbis(alkylphosphinsäuren), -salze oder -ester, die nach einem oder mehreren der Ansprüche 1 bis 18 hergestellt wurden, 5 bis 85 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft auch Flammschutzmittel, die die Ethylenbis(alkylphosphinsäuren), -salze oder -ester, die nach einem oder mehreren der Ansprüche 1 bis 18 hergestellt wurden enthalten.

Zudem betrifft die Erfindung Polymer-Formmassen, -Formkörper, -Filme, -Fäden und -Fasern, enthaltend die erfindungsgemäß hergestellten Ethylenbis(alkylphosphinsäure)salze (III) der Metalle Mg, Ca, Al, Zn, Ti, Sn, Zr, Ce oder Fe.

Die Erfindung wird durch die nachstehenden Beispiele erläutert.

Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz LSM® 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.
V-2: Zündung der Watte durch brennendes Abtropfen, übrige Kriterien wie bei V-1 Nicht klassifizierbar (nkl): erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24 - 28 | bedingt brennbar |
| LOI | 29 - 35 | flammwidrig |
| LOI | >36 | besonders flammwidrig |

Abkürzungen von eingesetzte Chemikalien

| | |
|---|---|
| VE-Wasser | voll-entsalztes Wasser |
| Deloxan® THP II | Metallfänger (Fa. Evonik Industries AG) |

### Beispiel 1

Bei Raumtemperatur werden in einem Dreihalskolben mit Rührer und Intensivkühler 580 g Tetrahydrofuran vorgelegt und unter Rühren und 10-minütigem Durchleiten von Stickstoff "entgast" und die weiteren Arbeiten unter Stickstoff ausgeführt. Es werden 70,0 mg Tris(dibenzyliden-aceton)dipalladium und 95,0 mg 4,5-Bis(diphenylphosphino)-9,9-dimethylxanthen hinzugegeben und weitere 15 Minuten gerührt, dann 198 g Phosphinsäure in 198 g Wasser zugegeben und für 10 Minuten Stickstoff durch das Reaktionsgemisch geleitet. Die Reaktionslösung wird in einen 2 I-Büchi-Reaktor überführt und der Dreihalskolben mit Tetrahydrofuran nachgespült. Unter Rühren des Reaktionsgemisches wird der Reaktor mit 2,5 bar Ethylen beschickt und das Reaktionsgemisch auf 80 °C (Manteltemperatur) geheizt. Nach stöchiometrischer Ethylenaufnahme wird auf Raumtemperatur abgekühlt und freies Ethylen unter Verbrennung abgelassen.

Das Reaktionsgemisch wird am Rotationsverdampfer bei maximal 60 °C und 350 - 10 mbar vom Lösungsmittel befreit. Der Rückstand wird mit 300 g VE-Wasser versetzt und 1 Stunde bei Raumtemperatur unter Stickstoffatmosphäre gerührt. Der entstandene Rückstand wird filtriert und das Filtrat mit 200 ml Toluol extrahiert. Die wässrige Phase wird am Rotationsverdampfer bei maximal 60 °C und 250 - 10 mbar vom Lösungsmittel befreit.
Ausbeute: 276 g Ethylphosphonigsäure (98 % der Theorie).

### Beispiel 2

Bei Raumtemperatur werden in einem Dreihalskolben mit Rührer und Intensivkühler 550 g Butanol vorgelegt und unter Rühren und Durchleiten von Stickstoff entgast und die weiteren Arbeiten unter Stickstoff ausgeführt. Dann werden 73,8 mg Tris(dibenzyliden-aceton)dipalladium und 100,2 mg 4,5-Bis(diphenylphosphino)-9,9-dimethylxanthen hinzugegeben und gerührt, danach 209 g Phosphinsäure in 209 g Wasser gegeben. Die Reaktionslösung wird in einen 2 I-Büchi-Reaktor überführt und unter Rühren mit 1 bar Ethylen Druck beschickt und das Reaktionsgemisch auf 100 °C geheizt. Nach stöchiometrischer Ethylenaufnahme wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur gerührt, dann filtriert und das Filtrat mit Toluol extrahiert, am Rotationsverdampfer vom Lösungsmittel befreit und die erhaltene Ethylphosphonigsäure aufgefangen. Ausbeute: 295 g (99 % der Theorie).

### Beispiel 3

Bei Raumtemperatur werden in einem Dreihalskolben mit Rührer und Intensivkühler 600 g Acetonitril vorgelegt und unter Rühren und Durchleiten von Stickstoff entgast und die weiteren Arbeiten unter Stickstoff ausgeführt. Es werden 53,1 mg Tris(dibenzyliden-aceton)dipalladium und 72,1 mg 4,5-Bis(diphenylphosphino)-9,9-dimethylxanthen hinzugegeben und gerührt, dann 150 g Phosphinsäure in 150 g Toluol zugegeben. Die Reaktionslösung wird in einen 2 I-Büchi-Reaktor überführt und unter Rühren und mit 5 bar Ethylen Druck beschickt und das Reaktionsgemisch auf 70 °C geheizt. Nach stöchiometrischer Ethylenaufnahme wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur gerührt, filtriert und das Filtrat mit Toluol extrahiert, danach am Rotationsverdampfer vom Lösungsmittel befreit und die erhaltene Ethylphosphonigsäure aufgefangen. Ausbeute: 212 g (99 % der Theorie).

### Beispiel 4

Bei Raumtemperatur werden in einem Dreihalskolben mit Rührer und Intensivkühler 188 g Wasser vorgelegt und unter Rühren und Durchleiten von Stickstoff entgast und die weiteren Arbeiten unter Stickstoff ausgeführt. Es werden 0,2 mg Palladium(II)sulfat und 2,3 mg Tris(3-sulfo-phenyl)phos-phin Trinatriumsalz hinzugegeben und gerührt, dann 66 g Phosphinsäure in 66 g Wasser zugegeben. Die Reaktionslösung wird in einen 2 I-Büchi-Reaktor überführt und unter Rühren und mit 1 bar Ethylen Druck beschickt und das Reaktionsgemisch auf 80 °C geheizt. Nach stöchiometrischer Ethylenaufnahme wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur gerührt, dann filtriert und das Filtrat mit Toluol extrahiert, danach wird am Rotationsverdampfer vom Lösungsmittel befreit und die erhaltene Ethylphosphonigsäure aufgefangen.
Ausbeute: 92 g (98 % der Theorie).

### Beispiel 5

Bei Raumtemperatur werden in einem Dreihalskolben mit Rührer, Thermometer und Intensivkühler 188 g Butanol vorgelegt und unter Rühren und Durchleiten von Stickstoff entgast und die weiteren Arbeiten unter Stickstoff ausgeführt. Es werden 0,2 mg Tris(dibenzyliden-aceton)dipalladium und 2,3 mg 4,5-Bis(diphenylphosphino)-9,9-dimethylxanthen, 66 g Phosphinsäure in 66 g Wasser und 117 g Octen hinzugegeben und gerührt. Anschließend wird das Reaktionsgemisch für 6 h auf 80 °C geheizt und am Rotationsverdampfer vom Lösungsmittel befreit. Der Rückstand wird mit 100 g Toluol versetzt und mit Wasser extrahiert, danach wird am Rotationsverdampfer die organische Phase vom Lösungsmittel befreit und die erhaltene Octanphosphonigsäure aufgefangen. Ausbeute: 176 g (98 % der Theorie).

### Beispiel 6

Wie in Beispiel 2 werden 99 g Phosphinsäure, 396 g Butanol, 42 g Ethylen, 6,9 mg Tris(dibenzylidenaceton)dipalladium und 9,5 mg 4,5-Bis(diphenylphosphino)-9,9-dimethylxanthen umgesetzt, dann zur Reinigung über eine mit Deloxan® THP II beschickte Säule gegeben und nochmal n-Butanol zugegeben. Bei einer Reaktionstemperatur von 80 - 110 °C wird das gebildete Wasser durch Azeotropdestillation entfernt. Das Produkt Ethylphosphonigsäurebutylester wird durch Destillation bei vermindertem Druck gereinigt.
Ausbeute: 189 g (84 % der Theorie).

### Beispiel 7

Wie in Beispiel 2 werden 198 g Phosphinsäure, 198 g Wasser, 84 g Ethylen, 6,1 mg Palladium(II)sulfat und 25,8 mg 9,9-Dimethyl-4,5-bis(diphenylphosphino)-2,7-sulfonatoxanthen Dinatriumsalz umgesetzt, danach über eine mit Deloxan® THP II beschickte Säule gegeben und dann n-Butanol zugefügt. Bei einer Reaktionstemperatur von 80 - 110 °C wird das gebildete Wasser durch Azeotropdestillation entfernt. Das Produkt Ethylphosphonigsäurebutylester wird durch Destillation bei vermindertem Druck gereinigt.
Ausbeute: 374 g (83 % der Theorie).

### Beispiel 8

In einem 500 ml-Fünfhalskolben mit Gaseinleitungsrohr, Thermometer, Intensivrührer und Rückflusskühler mit Gasverbrennung werden 94 g (1 mol) Ethylphosphonigsäure (hergestellt wie in Beispiel 2) vorgelegt. Bei Raumtemperatur wird Ethylenoxid eingeleitet, eine Reaktionstemperatur von 70 °C eingestellt und noch eine Stunde bei 80 °C nachreagiert. Die Ethylenoxidaufnahme beträgt 65,7 g. Die Säurezahl des Produktes ist kleiner 1 mg KOH/g. Ausbeute: 129 g (94 % der Theorie) Ethylphosphonigsäure-2-hydroxyethylester als farbloses, wasserklares Produkt.

### Beispiel 9

In einem 1 l-5-Halskolben, ausgestattet mit Gaseinleitungs-Fritte, Thermometer, Rührer, Rückflusskühler und UV-Lampe (0,125kW, cos ϕ 0,9) werden 94,0 g Ethylphosphonigsäure (hergestellt wie in Beispiel 2) in 200 g Essigsäure vorgelegt.
Gleichzeitig wird über die Gaseinleitungsfritte ca. 8 l/h Acetylen durch die Lösung geleitet. Die Reaktionstemperatur wird über ein Kühlbad auf 60 °C gehalten. Nach 8 h wird der Acetylenstrom geschlossen und das Acetylen mittels Durchleiten von Stickstoff entfernt. Die Ethylenbis(ethylphosphinsäure) fällt in Form farbloser Kristalle aus.
Ausbeute: 87 g (81 % der Theorie).

### Beispiel 10

In einem 1 l-5-Halskolben, ausgestattet mit Gaseinleitungs-Fritte, Thermometer, Rührer, Rückflusskühler und UV-Lampe (0,125kW, cos ϕ 0,9) werden 94,0 g Ethylphosphonigsäure (hergestellt wie in Beispiel 2) in 200 g Tetrahydrofuran gelöst.
Gleichzeitig wird über die Gaseinleitungsfritte ca. 8 l/h Acetylen durch die Lösung geleitet. Die Reaktionstemperatur wird über ein Kühlbad auf 40 °C gehalten. Nach 8 h wird der Acetylenstrom geschlossen und das Acetylen mittels Durchleiten von Stickstoff entfernt. Die Ethylenbis(ethylphosphinsäure) fällt in Form farbloser Kristalle aus.
Ausbeute: 79 g (74 % der Theorie).

### Beispiel 11

In einem 1 l-5-Halskolben, ausgestattet mit Gaseinleitungs-Fritte, Thermometer, Rührer, Rückflusskühler und UV-Lampe (0,125kW, cos ϕ 0,9) werden 94,0 g Ethylphosphonigsäure (hergestellt wie in Beispiel 2) in 200 g Acetonitril vorgelegt. Gleichzeitig wird über die Gaseinleitungsfritte ca. 10 l/h Acetylen durch die Lösung geleitet. Die Reaktionstemperatur wird über ein Kühlbad auf 50 °C gehalten. Nach 6 h wird der Acetylenstrom geschlossen. Die Ethylenbis(ethylphosphinsäure) fällt in Form farbloser Kristalle aus. Diese werden abfiltriert.
Ausbeute: 92 g (86 % der Theorie).

### Beispiel 12

In einem 1 l-5-Halskolben, ausgestattet mit Gaseinleitungs-Fritte, Thermometer, Rührer, Rückflusskühler und UV-Lampe (0,125kW, cos ϕ 0,9) werden 94,0 g Ethylphosphonigsäure (hergestellt wie in Beispiel 2) in 200 g Wasser gelöst. Gleichzeitig wird über die Gaseinleitungsfritte ca. 15 l/h Acetylen für 5 h durch die Lösung geleitet. Die Reaktionstemperatur wird über ein Kühlbad auf 30 °C gehalten. Die Ethylenbis(ethylphosphinsäure) fällt in Form farbloser Kristalle aus. Diese werden abfiltriert.
Ausbeute: 83 g (78 % der Theorie).

### Beispiel 13

In einem 2 l-Büchi-Autoklav, ausgestattet mit Gaseinleitungs-Fritte, Thermometer, Rührer und UV-Lampe (0,125kW, cos ϕ 0,9) werden 94,0 g Ethylphosphonigsäure (hergestellt wie in Beispiel 2) in 400 g Acetonitril vorgelegt und mit 3 bar Acetylen Druck beschickt. Die Reaktionstemperatur wird über die Wasserkühlung auf 50 °C gehalten. Nach 6 h wird die Reaktion beendet. Die Ethylenbis(ethylphosphinsäure) fällt in Form farbloser Kristalle aus. Diese werden abfiltriert.
Ausbeute: 95 g (89 % der Theorie).

### Beispiel 14

In einem 2 l-Büchi-Autoklav mit Gaseinleitungs-Fritte, Thermometer, Rührer und UV-Lampe (0,125kW, cos ϕ 0,9) werden 94,0 g Ethylphosphonigsäure (hergestellt wie in Beispiel 2) in 350 g Wasser vorgelegt und mit 1,2 bar Acetylen Druck beschickt. Die Reaktionstemperatur wird über die Wasserkühlung auf 60 °C gehalten. Nach 8 h wird die Reaktion beendet. Die Ethylenbis(ethylphosphinsäure) fällt in Form farbloser Kristalle aus, die abfiltriert werden.
Ausbeute: 88 g (82 % der Theorie).

### Beispiel 15

In einem 2 l-Büchi-Autoklav, ausgestattet mit Gaseinleitungs-Fritte, Thermometer, Rührer und UV-Lampe (0,125kW, cos ϕ 0,9) werden 94,0 g Ethylphosphonigsäure (hergestellt wie in Beispiel 2) in 300 g Butanol vorgelegt und mit 2 bar Acetylen Druck beschickt. Die Reaktionstemperatur wird über die Wasserkühlung auf 80 °C gehalten. Nach 4 h wird die Reaktion beendet. Die Ethylenbis(ethylphosphinsäure) fällt in Form farbloser Kristalle aus. Diese werden abfiltriert.
Ausbeute: 94 g (88 % der Theorie).

### Beispiel 16

In einem 1 l-5-Halskolben, ausgestattet mit Gaseinleitungs-Fritte, Thermometer, Rührer, Rückflusskühler und UV-Lampe (0,125kW, cos ϕ 0,9) werden 99,0 g Ethylphosphonigsäure (hergestellt wie in Beispiel 2) in 250 g Butanol gelöst. Gleichzeitig wird über die Gaseinleitungsfritte ca. 1 l/h Acetylen für 15 h durch die Lösung geleitet. Die Reaktionstemperatur wird über ein Kühlbad auf 80 °C gehalten. Die Ethylenbis(ethylphosphinsäure) fällt in Form farbloser Kristalle aus. Diese wird abfiltriert und mit Butanol gewaschen.
Ausbeute: 79 g (70 % der Theorie).

### Beispiel 17

In einem 1 l-5-Halskolben, ausgestattet mit Gaseinleitungs-Fritte, Thermometer, Rührer, Rückflusskühler und UV-Lampe (0,125kW, cos ϕ 0,9) werden 122 g Octanphosphonigsäure (hergestellt wie in Beispiel 3) in 250 g Butanol gelöst. Gleichzeitig wird über die Gaseinleitungsfritte ca. 8 l/h Acetylen für 5 h durch die Lösung geleitet. Die Reaktionstemperatur wird über ein Kühlbad auf 60 °C gehalten. Die Ethylenbis(octylphosphinsäure) wird nach Entfernen des Lösungsmittels am Rotationsverdampfer und Extraktion mit Toluol in einer Ausbeute von 59 g (81 % der Theorie) erhalten.

### Beispiel 18

321 g (1,5 mol) Ethylenbis(ethylphosphinsäure) (hergestellt wie in Beispiel 11) werden bei 85 °C in 400 ml Toluol gelöst und mit 888 g (12 mol) Butanol versetzt. Bei einer Reaktionstemperatur von ca. 100 °C wird das gebildete Wasser durch Azeotropdestillation entfernt. Nach Reinigung durch Chromatographie werden 401 g (83 % der Theorie) Ethylenbis(ethylphosphinsäurebutylester) erhalten.

### Beispiel 19

321 g (1,5 mol) Ethylenbis(ethylphosphinsäure) (hergestellt wie in Beispiel 11) werden bei 85 °C in 400 ml Toluol gelöst und mit 409 g (6,6 mol) Ethylenglykol versetzt und in einer Destillationsapparatur mit Wasserabscheider bei ca. 100 °C während 4 h verestert. Nach beendeter Veresterung wird das Toluol und überschüssiges Ethylglykol im Vakuum abgetrennt. Es werden 448 g (99 % der Theorie) Ethylenbis(ethylphosphinsäure-2-hydroxyethylester) als farbloses Öl erhalten.

### Beispiel 20

Zu 326 g (1 mol) Ethylenbis(ethylphosphinsäurebutylester) (hergestellt nach Beispiel 16) werden 155 g (2,5 mol) Ethylenglycol und 0,4 g Kaliumtitanyloxalat hinzugegeben und 2 h bei 200 °C gerührt. Durch langsames Evakuieren werden leicht flüchtige Anteile abdestilliert. Es werden 296 g (98 % der Theorie) Ethylenbis(ethylphosphinsäure-2-hydroxyethylester) erhalten.

### Beispiel 21

In einem 500 ml-Fünfhalskolben mit Gaseinleitungsrohr, Thermometer, Intensivrührer und Rückflusskühler mit Gasverbrennung werden 214 g (1 mol) Ethylenbis(ethyl-phosphinsäure), hergestellt wie in Beispiel 11, vorgelegt. Bei Raumtemperatur wird Ethylenoxid eingeleitet. Unter Kühlung wird eine Reaktionstemperatur von 70 °C eingestellt und noch eine Stunde bei 80 °C nachreagiert. Die Ethylenoxidaufnahme beträgt 64,8 g. Die Säurezahl des Produktes ist kleiner 1 mg KOH/g. Es werden 257 g (95 % der Theorie) Ethylenbis(ethylphosphinsäure-2-hydroxyethylester) als farblose, wasserklare Flüssigkeit erhalten.

### Beispiel 22

642 g (3 mol) Ethylenbis(ethylphosphinsäure) (hergestellt wie in Beispiel 11) werden in 860 g Wasser gelöst und in einem 5 l-Fünfhalskolben mit Thermometer, Rückflusskühler, Intensivrührer und Tropftrichter vorgelegt und mit ca. 960 g (12 mol) 50 %ige Natriumhydroxid-Lösung neutralisiert. Bei 85 °C wird eine Mischung von 2583 g einer 46 %igen wässrigen Lösung von Al₂(SO₄)₃·14 H₂O zugefügt. Anschließend wird der erhaltene Feststoff abfiltriert, mit heißem Wasser gewaschen und bei 130 °C im Vakuum getrocknet. Ausbeute: 642 g (93 % der Theorie) farbloses Ethylenbis(ethylphosphinsäure)-Aluminium(III)salz.

### Beispiel 23

214 g (1 mol) Ethylenbis(ethylphosphinsäure) (hergestellt wie in Beispiel 11) und 170 g Titantetrabutylat werden in 500 ml Toluol 40 Stunden unter Rückfluss erhitzt. Dabei entstehendes Butanol wird mit Anteilen an Toluol von Zeit zu Zeit abdestilliert. Die entstandene Lösung wird anschließend vom Lösungsmittel befreit. Man erhält 229 g Ethylenbis(ethylphosphinsäure)-Titansalz.

### Anwendungsbeispiele:

### Beispiel 24

Es werden zu 39,1 g Ethylenbis(ethylphosphinsäure-2-hydroxyethylester), hergestellt wie in Beispiel 18, 290 g Terephthalsäure, 188 g Ethylenglycol und 0,34 g Zinkacetat gegeben und 2 h auf 200 °C erhitzt. Dann werden 0,29 g Trinatriumphosphat-anhydrat und 0,14 g Antimon(III)oxid hinzugegeben, auf 280 °C erhitzt und danach evakuiert. Aus der erhaltenen Schmelze (363 g, Phosphorgehalt: 2,2 %) werden Probekörper der Dicke 1,6 mm für die Messung des Sauerstoffindexes (LOI) nach ISO 4589-2 und für den Brandtest UL 94 (Underwriter Laboratories) gespritzt.
Die so hergestellten Probekörper ergaben einen LOI von 42 und erfüllten nach UL 94 die Brandklasse V-0. Entsprechende Probekörper ohne Ethylenbis(ethylphosphinsäure-2-hydroxyethylester) ergaben einen LOI von nur 31 und erfüllten nach UL 94 nur die Brandklasse V-2.
Der Ethylenbis(ethylphosphinsäure-2-hydroxyethylester) enthaltende Polyester-Formkörper zeigt damit eindeutig sehr gute flammschützende Eigenschaften.

### Beispiel 25

Zu 19,6 g Ethylenbis(ethylphosphinsäure), hergestellt analog Beispiel 11, werden 12,9 g 1,3-Propylenglycol zugegeben und bei 160 °C das bei der Veresterung gebildete Wasser abgezogen. Dann werden 378 g Dimethylterephthalat, 192 g 1,3-Propandiol, 0,22 g Tetrabutyltitanat und 0,05 g Lithiumacetat zugegeben und die Mischung 2 h unter Rühren auf 130 bis 180 °C erhitzt, danach bei Unterdruck auf 270 °C. Das Polymer (418 g) enthält 1,4 % Phosphor, der LOI beträgt 38.

### Beispiel 26

Zu 19,7 g Ethylenbis(ethylphosphinsäure) (hergestellt wie in Beispiel 11) werden 367 g Dimethylterephthalat, 238 g 1,4-Butandiol, 0,22 g Tetrabutyltitanat und 0,05 g Lithiumacetat zugegeben und die Mischung 2 h lang unter Rühren auf 130 bis 180 °C erhitzt, danach bei Unterdruck auf 270 °C. Das Polymer (432 g) enthält 1,3 % Phosphor, der LOI beträgt 34, der von unbehandeltem Polybutylenterephthalat dagegen nur 23.

### Beispiel 27

In einem 250 ml-Fünfhalskolben mit Rückflusskühler, Rührer, Thermometer und Stickstoffeinleitung werden 100 g eines Bisphenol-A-bisglycidethers mit einem Epoxidwert von 0,55 mol/100 g (Beckopox® EP 140, Fa. Solutia) und 13,9 g (0,13 mol) Ethylenbis(ethylphosphinsäure) (hergestellt analog Beispiel 11) unter Rühren auf maximal 150 °C erhitzt. Nach 30 min ergibt sich eine klare Schmelze. Nach einer weiteren Stunde Rühren bei 150 °C wird die Schmelze abgekühlt und gemörsert. Man erhält 117,7 g eines weißen Pulvers mit einem Phosphorgehalt von 3,5 Gew.-%.

### Beispiel 28

In einem 2 l-Kolben mit Rührer, Wasserabscheider, Thermometer, Rückflusskühler und Stickstoffeinleitung werden 29,4 g Phthalsäureanhydrid, 19,6 g Maleinsäureanhydrid, 24,8 g Propylenglycol, 20,4 g
Ethylenbis(ethylphosphinsäure-2-hydroxyethylester) (hergestellt wie in Beispiel 18), 20 g Xylol und 50 mg Hydrochinon unter Rühren und Durchleiten von Stickstoff auf 100 °C erhitzt. Bei Einsetzen der exothermen Reaktion wird die Heizung entfernt. Nach Abklingen der Reaktion wird weiter bei ca. 190 °C gerührt. Nachdem 14 g Wasser abgeschieden sind, wird das Xylol abdestilliert und die Polymerschmelze abgekühlt. Man erhält 86,2 g eines weißen Pulvers mit einem Phosphorgehalt von 4,8 Gew.-%.

### Beispiel 29

Eine Mischung von 50 Gew.-% Polybutylenterephthalat, 20 Gew.-% 3-Ethylenbis(ethyl-phosphinsäure)-Aluminium(III)salz (hergestellt wie in Beispiel 20) und 30 Gew.-% Glasfasern werden auf einem Doppelschnecken-Extruder (Typ Leistritz LSM 30/34) bei Temperaturen von 230 bis 260 °C zu einer Polymerformmasse compoundiert. Der homogenisierte Polymerstrang wird abgezogen, im Wasserbad gekühlt und anschließend granuliert. Nach Trocknung werden die Formmassen auf einer Spritzgießmaschine (Typ Aarburg Allrounder) bei 240 bis 270 °C zu Polymerformkörpern verarbeitet und eine UL-94 Klassifizierung von V-0 bestimmt.

### Beispiel 30

Eine Mischung von 53 Gew.-% Polyamid 6.6, 30 Gew.-% Glasfasern und 17 Gew.-% 3-Ethylenbis(ethylphosphinsäure)-Titansalz (hergestellt wie in Beispiel 21) werden auf einem Doppelschnecken-Extruder (Typ Leistritz LSM 30/34) zu Polymerformmassen compoundiert. Der homogenisierte Polymerstrang wird abgezogen, im Wasserbad gekühlt und anschließend granuliert. Nach Trocknung werden die Formmassen auf einer Spritzgießmaschine (Typ Aarburg Allrounder) bei 260 bis 290 °C zu Polymerformkörpern verarbeitet und eine UL-94 Klassifizierung von V-0 erhalten.

Mit den weiter vorne beschriebenen Epoxidharz-Formulierungen wurden sogenannte Polymerformkörper hergestellt. Dazu werden die einzelnen Komponenten abgewogen und in einem geeigneten Gefäß bei hoher Rührgeschwindigkeit miteinander gemischt. Bei Raumtemperatur feste Harze werden vorher aufgeschmolzen. Nach dem Mischen wird durch Anlegen von Vakuum die Harzmischung entgast.

Die fertige Harzmischung wird in eine geeignete Gussform gegeben und bei Raumtemperatur oder im Trockenschrank ausgehärtet. Die Dicke der hergestellten Polymerformkörper lag bei 3 mm bzw. 1,6 mm.

Neben der Brennbarkeitsklasse nach UL 94 wurden an den hergestellten Polymerformkörper bevorzugt die Schlagzähigkeit nach Charpy (DIN EN ISO 179-1) und die Hydrolysebeständigkeit geprüft.

Zur Bestimmung der Hydrolysebeständigkeit wurden Polymerformkörper jeweils für 24 h bei 100 °C in 80 ml Wasser gelagert. Nach der Lagerung wurde der Phosphor-Gehalt des Wassers bestimmt.

Bei den durchgeführten Untersuchungen wurde gefunden, dass die erfindungsgemäß hergestellte Ethlyendiethylphosphinsäure neben der sehr guten Flammschutzwirkung auch die Sprödigkeit der ausgehärteten Epoxidharz-Matrix verringert und bei der Wasserlagerung nicht hydrolysiert wird.

Nachfolgend wird das Ergebnis durch zusätzliche Beispiele erläutert:
Zur Herstellung der flammgeschützten Epoxidharz-Formulierungen wurden folgende Verbindungen eingesetzt:
- Beckopox® EP 140 (BPA-EP-Harz, Solutia, United States)
- PF® 0790 K04 (Phenol-Novolak, Hexion Chemical,United States)
- 2-Phenylimidazol (Degussa/Trostberg, Germany)
- TS®-601 (Aluminiumtriyhdroxid, Martinswerk, Germany)
- DOPO®-HQ (10-(2,5-dihydroxyphenyl)-10H-9-oxa-10-phosphaphenanthren-10-oxid,Sanko Co., Ltd., Japan)

### Beispiel 31:

### a) Herstellung eines phosphormodifizierten Epoxidharzes auf Basis von Ethanbisethylphosphinsäure

In einem Vierhalskolben, ausgerüstet mit Rückflusskühler, Thermoelement, Stickstoffzuleitung und Rührer, werden 100 g Beckopox® EP 140, EP-Wert 180 g/mol, vorgelegt. Unter Rühren wird auf 110 °C aufgeheizt und unter Vakuum restliches Wasser entfernt, dann mit trockenem Stickstoff belüftet. Danach wird die Temperatur im Kolben auf 130 °C erhöht und 11,7 g Ethanbisethylphosphinsäure unter Rühren und Stickstoffdurchfluss zugegeben. Die Temperatur der Reaktionsmischung wird auf 160 °C erhöht und für 1 h gehalten. Das Produkt wird anschließend heiß ausgegossen und abgekühlt. Es wurde ein phosphormodifiziertes Epoxidharz mit einem P-Gehalt von 3 Gew.-% und einem Epoxyäquivalent von 267 g/mol erhalten.

Der Anteil an Phosphor im Epoxidharz wurde durch unterschiedliche Mengen an erfindungsgemäß hergestellter Ethanbisethylphosphinsäure bei der Synthese entsprechend variiert (Beispiele 31 a) 1 bis a) 4).

### b) Herstellung eines phosphormodifizierten Epoxidharzes auf Basis von DOPO-HQ (Vergleichsbeispiel, 31 b))

In einem Vierhalskolben, ausgerüstet mit Rückflusskühler, Thermoelement, Stickstoffzuleitung und Rührer, werden 100 g Beckopox® EP 140, EP-Wert 180 g/mol, vorgelegt. Unter Rühren wird auf 110 °C aufgeheizt und unter Vakuum restliches Wasser entfernt, dann mit trockenem Stickstoff belüftet. Danach wird die Temperatur im Kolben auf 130 °C erhöht und 19 g DOPO-HQ unter Rühren und Stickstoffdurchfluss zugegeben. Die Temperatur der Reaktionsmischung wird auf 160 °C erhöht und dort für 2,5 h gehalten. Das Produkt wird anschließend heiß ausgegossen und abgekühlt.
Es wurde ein phosphormodifiziertes Epoxidharz mit einem P-Gehalt von 1,5 Gew.-% und einem Epoxyäquivalent von 286 g/mol erhalten.

Tabelle 1 zeigt die Kombination der erfindungsgemäß hergestellten Ethanbisethylphosphinsäure mit einem Bisphenol-A-Novolak als Härter sowie in einem Beispiel mit einem zusätzlichen Flammschutzmittel. Als Beschleuniger wurde 2-Phenylimidazol verwendet.

Wie aus Tabelle 1 entnommen werden kann, wurde bei einer Konzentration von im P-Harz eine VO-Einstufung sowohl bei 3 mm auch als auch bei 1,6 mm Dicke erreicht. Die Schlagzähigkeiten der mit diesen Formulierungen hergestellten Polymerformkörper lag immer auf einem höheren Niveau im Vergleich zum Referenzbeispiel. In dem zur Hydrolyse verwendeten Wasser wurde zudem kein Phosphor gefunden. Demnach wird die erfindungsgemäß hergestellte Ethanbisethylphosphinsäure bei der Wasserlagerung nicht hydrolisiert und anschließend nicht aus dem duroplastischen Netzwerk herausgewaschen.

Dies hat den Vorteil, dass die erfindungsgemäße phosphorhaltige Verbindung im Produkt, d.h. dem Polymer verbleibt und somit vorteilhafterweise eine hohe Produktstabilität, länger anhaltende Materialeigenschaften und auch kein "Ausblühen" bewirkt.

### Beispiel 32 (Vergleichsbeispiel zur Herstellung von Ethylenbis(ethylphosphinsäure))

In einem 1 l-5-Halskolben, ausgestattet mit Gaseinleitungs-Fritte, Thermometer, Rührer, Rückflusskühler und Initiatordosierung wird eine Lösung von 94,0 g Ethylphosphonigsäure (hergestellt wie in Beispiel 1) in 200 g Eisessig gelöst und auf ca. 90 °C erhitzt. Unter Rühren wird über einen Zeitraum von 5 h eine Lösung von 11,4 g Ammoniumperoxodisulfat in 30 g Wasser zudosiert. Gleichzeitig wird über die Gaseinleitungsfritte ca. 10 l/h Acetylen durch die Lösung geleitet. Die Reaktionstemperatur wird dabei bei ca. 100 °C gehalten. Nach Entfernen des Acetylens mittels Durchleiten von Stickstoff lässt man abkühlen, wobei Ethylenbis(ethylphosphinsäure) in Form farbloser Kristalle ausfällt. Das Produkt enthält neben Ethylenbis(ethylphosphinsäure) noch 7 % Ethylphosphonsäure als oxidatives Nebenprodukt durch den Einsatz des Peroxid-Radikalstarters.
Nach Waschen mit Essigsäure wird das Produkt Ethylenbis(ethylphosphinsäure) in einer Ausbeute von 86,7 g (81 % der Theorie) erhalten.

**Tabelle 1**

| | | Beispiel 31 | | | | |
|---|---|---|---|---|---|---|
| | | a) 1 | a) 2 | a) 3 | a) 4 | b) (V)* |
| Harzformulierung | P-modifiziertes EP-Harz auf Basis Ethan-bis(ethylphosphinsäure) | 100 | 100 | 100 | 100 | - |
| | P-modifiziertes EP-Harz auf Basis DOPO-HQ | - | - | - | - | 100 |
| | Phenol-Novolak | 34 | 43 | 46 | 46 | 37 |
| | 2-Phenylimidazol | 0,03 | 0,03 | 0,03 | 0,03 | 0,03 |
| | Aluminiumtrihydrox id (TS601) | - | - | - | 25 | - |
| Eigenschaften des Polymerformkörpers | P-Gehalt in der Prüfplatte [%] | 2,6 | 1,8 | 1,3 | 1,3 | 1,1 |
| | Schlagzähigkeit nach Charpy [kJ/cm2] | 50 | 44 | 35 | 30 | 26 |
| | P-Gehalt Wasser nach Lagerung bei 100 °C [ppm] | <1 | <1 | <1 | <1 | <1 |
| | UL 94 | V0 | V0 | V1 | V0 | V0 |

| | | | | | | |
|---|---|---|---|---|---|---|
| * (V) = Vergleichsbeispiel | | | | | | |

Auch das gewaschene Endprodukt enthält noch Nebenkomponenten und Verunreinigungen, die auf den Radikalstarter zurück zu führen sind und die weiter abgetrennt werden müssen. Solche Nebenkomponenten sind zum Beispiel die Zersetzungsprodukte der Radikalstarter, aber auch das Lösungsmittel, in dem der Radikalstarter gelöst ist. Dementsprechend werden diese Neben- und Zersetzungsprodukte mit der nur radikalisch hergestellten Ethylenbis(ethylphosphinsäure) mit in das Polymer eingebracht und führen zu einer höheren Instabilität des Polymers. Außerdem ist die Handhabung von Radikalstartern im Labor und im Produktionsmaßstab, aufgrund der teilweisen hohen thermischen Instabilität, aufwendig und kostenintensiv.

## Patentansprüche

1. Verfahren zur Herstellung vonEthylenbis(alkylphosphinsäuren), -estern und -salzen, **dadurch gekennzeichnet, dass** man
a) eine Phosphinsäurequelle (I) 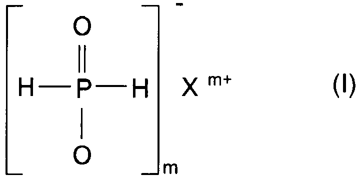 mit Olefinen (IV) 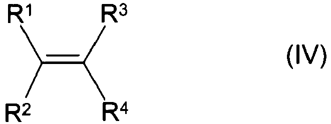 in Gegenwart eines Katalysators A zu einer Alkylphosphonigsäure, deren Salz oder Ester (II) 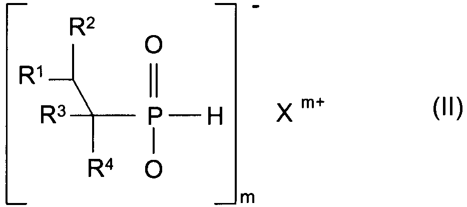 umsetzt,
b) die so entstandene Alkylphosphonigsäure, deren Salz oder Ester (II) mit acetylenischen Verbindung (V) 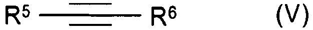 in Gegenwart eines Katalysators B zum Ethylenbis(alkylphosphinsäure)derivat (III) 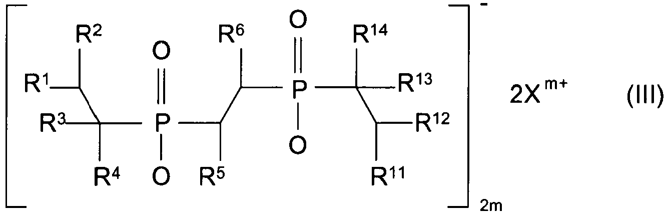 umsetzt, wobei
R¹, R², R³, R⁴, R⁵, R⁶, R¹¹, R¹², R¹³, R¹⁴ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl bedeuten, wobei die Gruppen C₆-C₁₈-Aryl, C₆-C₁₈-Aralkyl, C₆-C₁₈-Alkyl-Aryl mit -C(O)CH₃, OH, CH₂OH, NH₂, NO₂, OCH₃, SH und/oder OC(O)CH₃ substituiert sein können und
X für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht, und/oder für H, C₁-C₁₈-Alkyl, C₆-C₁₈-Aryl, C₆-C₁₈-Aralkyl, C₆-C₁₈-Alkyl-Aryl, (CH₂)ₖOH, CH₂-CHOH-CH₂OH, (CH₂)ₖO(CH₂)ₗH, (CH₂)ₖ-CH(OH)-(CH2)ₗH, (CH₂-CH₂O)ₖH, (CH₂-C[CH₃]HO)ₖH, (CH₂-C[CH₃]HO)ₖ(CH₂-CH₂O)ₗH, (CH₂-CH₂O)ₖ(CH₂-C[CH₃]HO)H, (CH₂-CH₂O)k-alkyl, (CH₂-C[CH₃]HO)ₖ-alkyl, (CH₂-C[CH₃]HO)ₖ(CH₂-CH₂O)ₗ-alkyl, (CH₂-CH₂O)ₖ(CH₂-C[CH₃]HO)O-alkyl, (CH2)kNH2, (CH₂)ₖN[(CH₂)_{I}H]₂ steht, wobei k und I gleich oder verschieden sind und unabhängig voneinander eine ganze Zahl von 0 bis 20 sind, und
m 1 bis 4 bedeutet,
und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um elektromagnetische Strahlung handelt.

2. Verfahren nach Anspruch 1, **dadurch gekennzeichnet, dass** man die nach Schritt a) erhaltene Alkylphosphonigsäure, deren Salz oder Ester (II) mit einem Alkenoxid oder einem Alkohol verestert, und den jeweils entstandenen Alkylphosphonigsäureester (II) und/oder Ethylenbis(alkylphosphinsäure)ester (III) dem weiteren Reaktionsschritt b) unterwirft.

3. Verfahren nach Anspruch 1 oder 2, **dadurch gekennzeichnet, dass** man die nach Schritt b) erhaltene Ethylenbis(alkylphosphinsäure), deren Salz oder Ester (III) davon mit einem Alkenoxid oder einem Alkohol M-OH und/oder M'-OH verestert.

4. Verfahren nach einem oder mehreren der Ansprüche 1 bis 3, **dadurch gekennzeichnet, dass** man die nach Schritt b) erhaltene Ethylenbis(alkylphosphinsäure), deren Salz oder Ester (III) anschließend in einem Schritt c) mit Metallverbindungen von Mg, Ca, AI, Sb, Sn, Ge, Ti, Fe, Zr, Zn, Ce, Bi, Sr, Mn, Li, Na, K und/oder einer protonierte Stickstoffbase zu den entsprechenden Ethylenbis(alkylphosphinsäure)salzen (III) dieser Metalle und/oder einer Stickstoffverbindung umsetzt.

5. Verfahren nach einem oder mehreren der Ansprüche 1 bis 4, **dadurch gekennzeichnet, dass** R¹, R², R³, R⁴, R⁵, R⁶, R¹¹, R¹², R¹³, R¹⁴ gleich oder verschieden sind und, unabhängig voneinander H, Methyl, Ethyl, n-Propyl, Isopropyl, n-Butyl, Isobutyl, tert. Butyl und/oder Phenyl bedeuten.

6. Verfahren nach einem oder mehreren der Ansprüche 1 bis 5, **dadurch gekennzeichnet, dass** X H, Ca, Mg, AI, Zn, Ti, Mg, Ce, Fe, Methyl, Ethyl, n-Propyl, Isopropyl, n-Butyl, Isobutyl, tert. Butyl, Phenyl, Poly(oxyethylen), Oxypropylen, Poly(oxypropylen), Oxybutylen, Poly(oxybutylen) und/oder Allyl-Ether bedeutet.

7. Verfahren nach einem oder mehreren der Ansprüche 1 bis 6, **dadurch gekennzeichnet, dass** es sich bei den Übergangsmetallen um Rhodium, Nickel, Palladium, Platin und/oder Ruthenium handelt.

8. Verfahren nach einem oder mehreren der Ansprüche 1 bis 7, **dadurch gekennzeichnet, dass** bevorzugt gasförmige Olefine eingesetzt werden.

9. Verfahren nach einem oder mehreren der Ansprüche 1 bis 8, **dadurch gekennzeichnet, dass** es sich bei den gasförmigen Olefinen um Ethylen, Propylen, 1-Buten, 2-Buten und/oder 2-Methyl-propylen handelt.

10. Verfahren nach einem oder mehreren der Ansprüche 1 bis 9, **dadurch gekennzeichnet, dass** die Temperatur im Reaktionsschritt a) 40 - 120 °C und im Reaktionsschritt b) 30 - 100 °C beträgt.

11. Verfahren nach einem oder mehreren der Ansprüche 1 bis 10, **dadurch gekennzeichnet, dass** die Temperatur im Reaktionsschritt a) 60 - 100 °C und im Reaktionsschritt b) 50 - 80 °C beträgt.

12. Verfahren nach einem oder mehreren der Ansprüche 1 bis 11, **dadurch gekennzeichnet, dass** der Druck im Reaktionsschritt a) und im Reaktionsschritt b) jeweils 0 - 10 bar beträgt.

13. Verfahren nach einem oder mehreren der Ansprüche 1 bis 12, **dadurch gekennzeichnet, dass** der Druck im Reaktionsschritt a) und im Reaktionsschritt b) jeweils 1 - 5 bar und der Gasdurchfluss im Reaktionsschritt a) und im Reaktionsschritt b) jeweils 5 - 12 L/h beträgt.

14. Verfahren nach einem oder mehreren der Ansprüche 1 bis 13, **dadurch gekennzeichnet, dass** es sich bei der elektromagnetische Strahlung um UV-Strahlung handelt.

15. Verfahren nach einem oder mehreren der Ansprüche 1 bis 14, **dadurch gekennzeichnet, dass** es sich bei der elektromagnetische Strahlung um UV-Strahlung mit der Wellenlänge zwischen 400 und 10 nm handelt.

16. Verfahren nach einem oder mehreren der Ansprüche 1 bis 15, **dadurch gekennzeichnet, dass** es sich bei der acetylenischen Verbindung (V) um Acetylen, Methylacetylen, 1-Butin, 1-Hexin, 2-Hexin, 1-Octin, 4-Octin, 1-Butin-4-ol, 2-Butin-1-01, 3-Butin-1-ol, 5-Hexin-1-ol, 1-Octin-3-ol, 1-Pentin und/oder Phenylacetylen handelt.

17. Verfahren nach einem oder mehreren der Ansprüche 1 bis 16, **dadurch gekennzeichnet, dass** es sich bei der acetylenischen Verbindung (V) um Acetylen handelt.

18. Verfahren nach einem oder mehreren der Ansprüche 1 bis 17, **dadurch gekennzeichnet, dass** es bei dem Alkohol M-OH um lineare oder verzweigte, gesättigte und ungesättigte, einwertige Alkohole und bei dem Alkohol M'-OH mehrwertige organische Alkohole mit einer Kohlenstoffkettenlänge von jeweils C₁-C₁₈.

## Claims

1. Process for preparing ethylenebis(alkylphosphinic) acids, esters and salts, which comprises
a) reacting a phosphinic acid source (I) 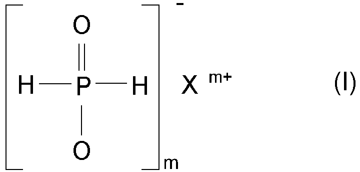 with olefins (IV) 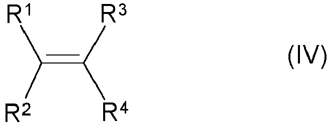 in the presence of a catalyst A to give an alkylphosphonous acid (II), or salt or ester thereof, 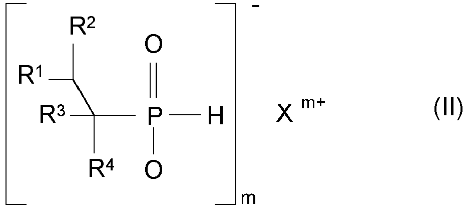
b) reacting the alkylphosphonous acid (II), or salt or ester thereof, thus formed with an acetylenic compound (V) 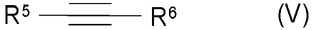 in the presence of a catalyst B to give the ethylenebis(alkylphosphinic) acid derivative (III) 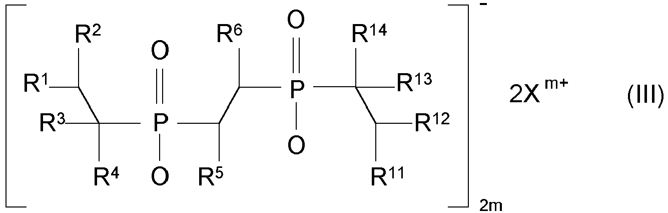 where
R¹, R², R³, R⁴, R⁵, R⁶, R¹¹, R¹², R¹³, R¹⁴ are the same or different and are each independently H, C₁-C₁₈-alkyl, C₆-C₁₈-aryl, C₆-C₁₈-aralkyl, C₆-C₁₈-alkylaryl, where the C₆-C₁₈-aryl, C₆-C₁₈-aralkyl, C₆-C₁₈-alkylaryl groups may be substituted by -C(O)CH₃, OH, CH₂OH, NH₂, NO₂, OCH₃, SH and/or OC(O)CH₃, and
X is Mg, Ca, Al, Sb, Sn, Ge, Ti, Fe, Zr, Zn, Ce, Bi, Sr, Mn, Cu, Ni, Li, Na, K, H and/or a protonated nitrogen base, and/or is H, C₁-C₁₈-alkyl, C₆-C₁₈-aryl, C₆-C₁₈-aralkyl, C₆-C₁₈-alkylaryl, (CH₂)ₖOH, CH₂-CHOH-CH₂OH, (CH₂)ₖO(CH₂)₁H, (CH₂)ₖ-CH(OH)- (CH₂)₁H, (CH₂-CH₂O)ₖH, (CH₂-C[CH₃]HO)ₖH, (CH₂-C[CH₃]HO)ₖ(CH₂-CH₂O)₁H, (CH₂-CH₂O)ₖ (CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)₁-alkyl, (CH₂-CH₂O)ₖ(CH₂-C[CH₃]HO)O-alkyl, (CH₂)ₖNH₂, (CH₂) ₖN[(CH₂)₁H]₂, where k and 1 are the same or different and are each independently an integer from 0 to 20, and
m is 1 to 4,
and the catalyst A comprises transition metals and/or transition metal compounds and/or catalyst systems composed of a transition metal and/or a transition metal compound and at least one ligand, and the catalyst B comprises electromagnetic radiation.

2. Process according to Claim 1, wherein the alkylphosphonous acid (II), or salt or ester thereof, obtained after step a) is esterified with an alkene oxide or an alcohol, and the alkylphosphonous ester (II) and/or ethylenebis(alkylphosphinic) ester (III) formed in each case is subjected to the further reaction step b).

3. Process according to Claim 1 or 2, wherein the ethylenebis(alkylphosphinic) acid (III), or salt or ester thereof, obtained after step b) is esterified with an alkene oxide or an alcohol M-OH and/or M'-OH.

4. Process according to one or more of Claims 1 to 3, wherein the ethylenebis(alkylphosphinic) acid (III), or salt or ester thereof, obtained after step b) is subsequently reacted, in a step c), with metal compounds of Mg, Ca, Al, Sb, Sn, Ge, Ti, Fe, Zr, Zn, Ce, Bi, Sr, Mn, Li, Na, K and/or a protonated nitrogen base to give the corresponding ethylenebis(alkylphosphinic) salts (III) of these metals and/or a nitrogen compound.

5. Process according to one or more of Claims 1 to 4, wherein R¹, R², R³, R⁴, R⁵, R⁶, R¹¹, R¹², R¹³, R¹⁴ are the same or different and are each independently H, methyl, ethyl, n-propyl, isopropyl, n-butyl, isobutyl, tert-butyl and/or phenyl.

6. Process according to one or more of Claims 1 to 5, wherein X is H, Ca, Mg, Al, Zn, Ti, Mg, Ce, Fe, methyl, ethyl, n-propyl, isopropyl, n-butyl, isobutyl, tert-butyl, phenyl, poly(oxyethylene), oxypropylene, poly(oxypropylene), oxybutylene, poly(oxybutylene) and/or allyl ether.

7. Process according to one or more of Claims 1 to 6, wherein the transition metals are rhodium, nickel, palladium, platinum and/or ruthenium

8. Process according to one or more of Claims 1 to 7, wherein preferably gaseous olefins are used.

9. Process according to one or more of Claims 1 to 8, wherein the gaseous olefins are ethylene, propylene, 1-butene, 2-butene and/or 2-methylpropylene.

10. Process according to one or more of Claims 1 to 9, wherein the temperature in reaction step a) is 40-120°C and that in reaction step b) is 30-100°C.

11. Process according to one or more of Claims 1 to 10, wherein the temperature in reaction step a) is 60-100°C and that in reaction step b) is 50-80°C.

12. Process according to one or more of Claims 1 to 11, wherein the pressure in each of reaction step a) and reaction step b) is 0-10 bar.

13. Process according to one or more of Claims 1 to 12, wherein the pressure in each of reaction step a) and reaction step b) is 1-5 bar and the gas flow in each of reaction step a) and reaction step b) is 5-12 1/h.

14. Process according to one or more of Claims 1 to 13, wherein the electromagnetic radiation is UV radiation.

15. Process according to one or more of Claims 1 to 14, wherein the electromagnetic radiation is UV radiation having a wavelength between 400 and 10 nm.

16. Process according to one or more of Claims 1 to 15, wherein the acetylenic compound (V) is acetylene, methylacetylene, 1-butyne, 1-hexyne, 2-hexyne, 1-octyne, 4-octyne, 1-butyn-4-ol, 2-butyn-1-ol, 3-butyn-1-ol, 5-hexyn-1-ol, 1-octyn-3-ol, 1-pentyne and/or phenylacetylene.

17. Process according to one or more of Claims 1 to 16, wherein the acetylenic compound (V) is acetylene.

18. Process according to one or more of Claims 1 to 17, wherein the alcohol M-OH comprises linear or branched, saturated and unsaturated, monohydric alcohols and the alcohol M'-OH comprises polyhydric organic alcohols each having a carbon chain length of C₁-C₁₈.

## Revendications

1. Procédé pour la préparation d'acides éthylène-bis(alkylphosphiniques), d'esters d'acides éthylène-bis(alkylphosphiniques) et de sels d'acides éthylène-bis(alkylphosphiniques), **caractérisé en ce que**
a) on transforme une source d'acide phosphinique (I) 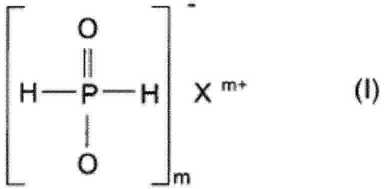 avec des oléfines (IV) 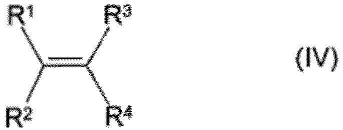 en présence d'un catalyseur A pour donner un acide alkylphosphoneux, son sel ou son ester (II) 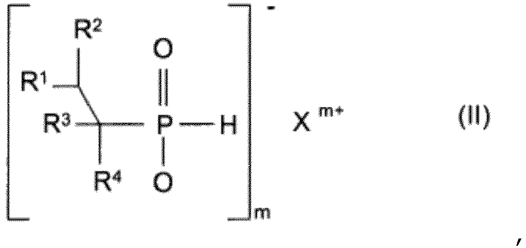
b) on transforme l'acide alkylphosphoneux ainsi formé, son sel ou son ester (II) avec un composé acétylénique (V) 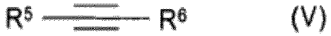 en présence d'un catalyseur B pour donner un dérivé d'acide éthylène-bis(alkylphosphinique) (III) 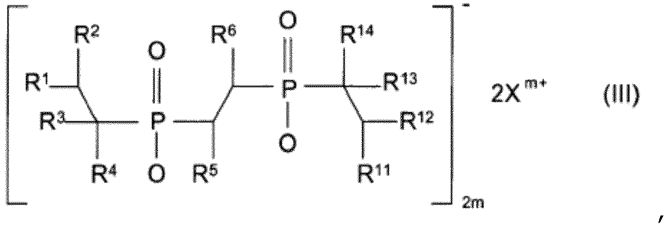
R¹, R², R³, R⁴, R⁵, R⁶, R¹¹, R¹², R¹³, R¹⁴ étant identiques ou différents et signifiant indépendamment les uns des autres H, C₁₋₁₈-alkyle, C₆₋₁₈-aryle, C₆₋₁₈-aralkyle, C₆₋₁₈-alkyl-aryle, les groupes C₆₋₁₈-aryle, C₆₋₁₈-aralkyle et C₆₋₁₈-alkyl-aryle pouvant être substitués par -C(O)CH₃, OH, CH₂OH, NH₂, NO₂, OCH₃, SH et/ou OC(O)CH₃ et
X représentant Mg, Ca, Al, Sb, Sn, Ge, Ti, Fe, Zr, Zn, Ce, Bi, Sr, Mn, Cu, Ni, Li, Na, K, H et/ou une base azotée protonée, et/ou représentant H, C₁₋₁₈-alkyle, C₆₋₁₈-aryle, C₆-₁₈-aralkyle, C₆₋₁₈-alkyl-aryle, (CH₂)ₖOH, CH₂-CHOH-CH₂OH, (CH₂)ₖO(CH₂)₁H, (CH₂)ₖ-CH(OH)-(CH₂)₁H, (CH₂-CH₂O)ₖH, (CH₂-C[CH₃]HO)ₖH, (CH₂-C[CH₃]HO)ₖ(CH₂-CH₂O)₁H, (CH₂-CH₂O)ₖ(CH₂-C[CH₃]HO)H, (CH₂-CH₂O)ₖ-alkyle, (CH₂-C[CH₃]HO)ₖ-alkyle, (CH₂-C[CH₃]HO)ₖ(CH₂-CH₂O)₁-alkyle, (CH₂-CH₂O)ₖ(CH₂-C[CH₃]HO)O-alkyle, (CH₂)ₖNH₂, (CH₂)ₖN[(CH₂)₁H]₂, k et 1 étant identiques ou différents et étant indépendamment l'un de l'autre un nombre entier de 0 à 20, et
m signifiant 1 à 4,
et le catalyseur A étant des métaux de transition et/ou des composés de métal de transition et/ou des systèmes de catalyseur, qui sont composés d'un métal de transition et/ou d'un composé de métal de transition et d'au moins un ligand et le catalyseur B étant un rayonnement électromagnétique.

2. Procédé selon la revendication 1, **caractérisé en ce qu'**on estérifie l'acide alkylphosphoneux, son sel ou son ester (II) obtenu après l'étape a) avec un oxyde d'alcène ou un alcool, et on soumet l'ester d'acide alkylphosphoneux (II) et/ou l'ester d'acide éthylène-bis(alkylphosphinique) (III) à chaque fois formé à l'étape de réaction supplémentaire b).

3. Procédé selon la revendication 1 ou 2, **caractérisé en ce qu'**on estérifie l'acide éthylène-bis (alkylphosphinique), son sel ou un ester de celui-ci (III) obtenu après l'étape b) avec un oxyde d'alcène ou un alcool M-OH et/ou M'OH.

4. Procédé selon l'une ou plusieurs des revendications 1 à 3, **caractérisé en ce qu'**on transforme l'acide éthylène-bis(alkylphosphinique), son sel ou son ester (III) obtenu après l'étape b) par la suite dans une étape c) avec des composés métalliques de Mg, de Ca, d'Al, de Sb, de Sn, de Ge, de Ti, de Fe, de Zr, de Zn, de Ce, de Bi, de Sr, de Mn, Li, de Na, de K et/ou une base azotée protonée pour donner les sels d'acide éthylène-bis(alkylphosphinique) (III) correspondants de ces métaux et/ou d'un composé azoté.

5. Procédé selon l'une ou plusieurs des revendications 1 à 4, **caractérisé en ce que** R¹, R², R³, R⁴, R⁵, R⁶, R¹¹, R¹², R¹³, R¹⁴ sont identiques ou différents et signifient indépendamment les uns des autres H, méthyle, éthyle, n-propyle, isopropyle, n-butyle, isobutyle, tert-butyle et/ou phényle.

6. Procédé selon l'une ou plusieurs des revendications 1 à 5, **caractérisé en ce que** X signifie H, Ca, Mg, Al, Zn, Ti, Mg, Ce, Fe, méthyle, éthyle, n-propyle, isopropyle, n-butyle, isobutyle, tert-butyle, phényle, poly(oxyéthylène), oxypropylène, poly(oxypropylène), oxybutylène, poly(oxybutylène) et/ou éther d'allyle.

7. Procédé selon l'une ou plusieurs des revendications 1 à 6, **caractérisé en ce que** les métaux de transition sont le rhodium, le nickel, le palladium, le platine et/ou le ruthénium.

8. Procédé selon l'une ou plusieurs des revendications 1 à 7, **caractérisé en ce que** préférablement des oléfines gazeuses sont utilisées.

9. Procédé selon l'une ou plusieurs des revendications 1 à 8, **caractérisé en ce que** les oléfines gazeuses sont l'éthylène, le propylène, le 1-butène, le 2-butène et/ou le 2-méthyl-propylène.

10. Procédé selon l'une ou plusieurs des revendications 1 à 9, **caractérisé en ce que** la température dans l'étape de réaction a) est de 40 à 120 °C et dans l'étape de réaction b) de 30 à 100 °C.

11. Procédé selon l'une ou plusieurs des revendications 1 à 10, **caractérisé en ce que** la température dans l'étape de réaction a) est de 60 à 100 °C et dans l'étape de réaction b) de 50 à 80 °C.

12. Procédé selon l'une ou plusieurs des revendications 1 à 11, **caractérisé en ce que** la pression dans l'étape de réaction a) et dans l'étape de réaction b) est à chaque fois de 0 à 10 bars.

13. Procédé selon l'une ou plusieurs des revendications 1 à 12, **caractérisé en ce que** la pression dans l'étape de réaction a) et dans l'étape de réaction b) est à chaque fois de 1 à 5 bars et le débit de gaz dans l'étape de réaction a) et dans l'étape de réaction b) est à chaque fois de 5 à 12 L/h.

14. Procédé selon l'une ou plusieurs des revendications 1 à 13, **caractérisé en ce que** le rayonnement électromagnétique est un rayonnement UV.

15. Procédé selon l'une ou plusieurs des revendications 1 à 14, **caractérisé en ce que** le rayonnement électromagnétique est un rayonnement UV doté d'une longueur d'onde comprise entre 400 et 10 nm.

16. Procédé selon l'une ou plusieurs des revendications 1 à 15, **caractérisé en ce que** le composé acétylénique (V) est l'acétylène, le méthylacétylène, le 1-butyne, le 1-hexyne, le 2-hexyne, le 1-octyne, le 4-octyne, le 1-butyn-4-ol, le 2-butyn-1-ol, le 3-butyn-1-ol, le 5-hexyn-1-ol, le 1-octyn-3-ol, le 1-pentyne et/ou le phénylacétylène.

17. Procédé selon l'une ou plusieurs des revendications 1 à 16, **caractérisé en ce que** le composé acétylénique (V) est l'acétylène.

18. Procédé selon l'une ou plusieurs des revendications 1 à 17, **caractérisé en ce que** l'alcool M-OH est un alcool monovalent linéaire ou ramifié, saturé ou insaturé et l'alcool M'-OH est un alcool organique polyvalent doté d'une longueur de chaîne carbonée à chaque fois de C₁-₁₈.
